# EUROPÄISCHE PATENTSCHRIFT

(11) **EP 3 558 764 B1**
(45) Veröffentlichungstag und Bekanntmachung des Hinweises auf die Patenterteilung: **13.01.2021**
(21) Anmeldenummer: 16815870.7
(22) Anmeldetag: 22.12.2016
(51) Int. Cl.: A46B 13/00, B60S 3/06

(54) **FAHRZEUGBEHANDLUNGSBÜRSTE UND FAHRZEUGBEHANDLUNGSANLAGE**
VEHICLE TREATMENT BRUSH AND VEHICLE TREATMENT SYSTEM
BROSSE D'ENTRETIEN DE VÉHICULES ET INSTALLATION D'ENTRETIEN DE VÉHICULES

(43) Veröffentlichungstag der Anmeldung: 30.10.2019
(73) Patentinhaber: Alfred Kärcher SE & Co. KG, 71364 Winnenden (DE)
(72) Erfinder: HABERL, Bernd, 71554 Weissach im Tal (DE)
(74) Vertreter: Hoeger, Stellrecht & Partner Patentanwälte mbB
(86) Internationale Anmeldenummer: PCT/EP2016/082362
(87) Internationale Veröffentlichungsnummer: WO 2018/113970

(56) Entgegenhaltungen:
- US-A- 4 192 036

## Beschreibung

Die vorliegende Erfindung betrifft eine Fahrzeugbehandlungsbürste für Wasch- und/oder Polierzwecke in einer Fahrzeugbehandlungsanlage, umfassend ein eine Längserstreckung aufweisendes und eine Schwenkachse definierendes Trägerteil, eine Mehrzahl von axial nebeneinander angeordneten und jeweils Reinigungselemente umfassenden Bürstensegmenten und eine Antriebseinrichtung, wobei mindestens ein Bürstensegment eine Schwenkeinrichtung mit einem Drehkörper umfasst, an dem die Reinigungselemente des Bürstensegmentes indirekt oder direkt gehalten sind und der mit der Antriebseinrichtung in Wirkverbindung steht zum Antreiben des Drehkörpers um eine von der Schwenkachse unterschiedliche Drehachse des Bürstensegmentes, wobei der Drehkörper über die Schwenkeinrichtung relativ zum Trägerteil um die Schwenkachse verschwenkbar ist, wobei das Bürstensegment mindestens eine Rückstelleinrichtung mit einem Rückstellelement umfasst, entgegen dessen Wirkung die Schwenkeinrichtung relativ zum Trägerteil in einer Schwenkrichtung verschwenkbar ist.

Die Fahrzeugbehandlungsbürste kann zur Behandlung seitlicher Fahrzeugbereiche oder als "Dach"behandlungsbürste zum Einsatz kommen, mit der an einer Oberseite liegende Fahrzeugbereiche und insbesondere das Dach behandelt werden können.

Außerdem betrifft die vorliegende Erfindung eine Fahrzeugbehandlungsanlage. Bei der Fahrzeugbehandlungsanlage kann es sich um eine Portalanlage handeln, bei der ein mit einer Fahrzeugbehandlungsbürste versehenes Portal relativ zu einem feststehenden Fahrzeug bewegt wird. Alternativ kann die Fahrzeugbehandlungsanlage eine Behandlungsstraße sein, in der das Fahrzeug mittels einer Fördervorrichtung relativ zu einer Fahrzeugbehandlungsbürste transportiert wird.

In der Praxis besteht das Problem, dass Fahrzeuge unterschiedliche und insbesondere unregelmäßige Konturen aufweisen können und dass eine Reinigung gleicher Qualität von Fahrzeugen unterschiedlicher Konturen Schwierigkeiten bereitet. Beispielsweise weisen Sportwagen eine flache, zur Seite oftmals stark konvexe Kontur auf, Limousinen eine mittelhohe, trapezförmige Kontur und Großraumlimousinen und Kleinbusse eine eher rechteckförmige Kontur. Bekannt ist es, Fahrzeugbehandlungsbürsten zur Anpassung an die Fahrzeugkontur relativ zur Vertikalen zu neigen, wodurch das Reinigungsergebnis verbessert werden kann. Allerdings erlaubt die Vielzahl von Designvarianten allein auf diese Weise eine nur durchschnittliche Verbesserung.

Die EP 0 012 683 schlägt vor, eine Antriebswelle der Fahrzeugbehandlungsbürste mit einem Gelenk auszustatten, so dass zwei im Winkel zueinander ausgerichtete Abschnitte der Antriebswelle vorhanden sind. Nachteilig ist es jedoch, dass im Bereich des Gelenkes Waschelemente ausgespart sind und das Fahrzeug an dieser Stelle nur unzureichend gereinigt wird. Zudem ist es erforderlich, zur Bereitstellung und Aufrechterhaltung der Abwinklung die Welle an beiden Endseiten zu lagern, was einen beträchtlichen Material- und Herstellungsaufwand erfordert.

Eine weitere Fahrzeugbehandlungsbürste in der EP 0 808 753 A1 umfasst eine Hohlwelle, die auf einem im Inneren angeordneten Kern drehbar gelagert ist. Der Kern kann an einem Gelenk abgewinkelt werden. Unterschiedliche Segmente der Hohlwelle sind über stirnseitige Verzahnungen gekoppelt. Die Fahrzeugbehandlungsbürste hat den Nachteil einer komplexen, herstellungstechnisch aufwändigen Konstruktion. Zudem ist eine Anpassung an unterschiedliche Fahrzeugkonturen nur eingeschränkt möglich.

Andere Vorschläge zur Verbesserung des Reinigungsergebnisses setzen an den Reinigungselementen der Fahrzeugbehandlungsbürste an. Beispielsweise wird in der DE 10 2006 017 999 A1 vorgeschlagen, dass die Reinigungselemente im drehenden Zustand der Fahrzeugbehandlungsbürste über ihre freien Enden eine konkave Kontur ausbilden, die näherungsweise der konvexen Kontur von Fahrzeugen entspricht. Die Herstellung dieser Fahrzeugbehandlungsbürste ist mit hohen Kosten verbunden, da für unterschiedliche axiale Abschnitte verschiedenartige Reinigungselemente vorgehalten und montiert werden müssen. Außerdem ist lediglich eine Anpassung an eine gewissermaßen "durchschnittliche" Fahrzeugkontur möglich. Einschränkungen kommen besonders bei der Behandlung von flachen Fahrzeugen wie etwa Sportwagen und hohen Fahrzeugen wie Kleinbussen zutage.

Weitere Ansätze bestehen darin, die Fahrzeugbehandlungsbürste axial in unterschiedliche Bürstensegmente zu unterteilen. Die Bürstensegmente weisen hohlzylindrische Drehkörper auf, die über eine Antriebseinrichtung um ihre jeweilige Achse rotiert werden und relativ zu einer sie antreibenden, exzentrisch angeordneten Welle verschwenkt werden können. Eine derartige Fahrzeugbehandlungsbürste ist zum Beispiel in der DE 27 33 091 und in der gattungsgemäßen US 4,192,036 beschrieben. Diese erweist sich in der Praxis jedoch aufgrund eines Reibrollenantriebs, der infolge von eindringendem Schmutz oder Reinigungsflüssigkeit unzuverlässig funktioniert, als praxisuntauglich. Indessen bewährt sich eine in der nicht-vorveröffentlichten Anmeldung DE 10 2015 111 023 derselben Anmelderin beschriebene Fahrzeugbehandlungsbürste. Hierbei können die Drehkörper über ein Zahnradgetriebe angetrieben werden. Eine Beeinträchtigung des Antriebs des Drehkörpers durch Schmutz oder Reinigungsflüssigkeit kann dadurch weitestgehend verhindert werden, zumal eine gehäuseartige Kopplung des Antriebs vorhanden ist. Die in der DE 10 2015 111 023 beschriebene Fahrzeugbehandlungsbürste bewährt sich in der Praxis.

Aufgabe der vorliegenden Erfindung ist es, eine Fahrzeugbehandlungsbürste und eine Fahrzeugbehandlungsanlage mit einer Fahrzeugbehandlungsbürste bereitzustellen, wobei mit der Fahrzeugbehandlungsbürste eine Anpassung an die Kontur des Fahrzeugs erzielt werden kann, um ein gutes Reinigungsergebnis zu erzielen.

Diese Aufgabe wird bei einer gattungsgemäßen Fahrzeugbehandlungsbürste erfindungsgemäß dadurch gelöst, dass das Rückstellelement eine Torsionsfeder umfasst oder bildet, die mit der Schwenkeinrichtung einerseits und einem ortsfesten Halteelement andererseits koppelt zum Verschwenken der Schwenkeinrichtung und des Halteelementes relativ zueinander.

Die erfindungsgemäße Fahrzeugbehandlungsbürste ist axial, bezogen auf die Schwenkachse des Trägerteils, in mehrere Bürstensegmente mit jeweiligen Reinigungselementen unterteilt. Bei zumindest einem Bürstensegment, vorzugsweise zwei oder mehr und besonders bevorzugt allen Bürstensegmenten ist ein Drehkörper vorgesehen, der über die Antriebseinrichtung um eine von ihm definierte Drehachse in Rotation versetzt werden kann. Die Drehachse unterscheidet sich von der vom Trägerteil definierten Schwenkachse, so dass das Trägerteil exzentrisch relativ zum Drehkörper bezüglich der Drehachse angeordnet ist. Der Drehkörper kann über die Schwenkeinrichtung relativ zum Trägerteil in zumindest eine und vorzugsweise zwei Schwenkrichtungen verschwenken. Bei Annäherung der Fahrzeugbehandlungsbürste an das Fahrzeug kann die Drehbewegung des Drehkörpers zum Abreinigen des Fahrzeugs aufrechterhalten werden, während der Drehkörper über die Schwenkeinrichtung abhängig von der Fahrzeugkontur verschwenkt wird und dadurch eine optimale Einstellung des Abstandes des Bürstensegmentes relativ zum Fahrzeug ermöglicht wird. Die Verschwenkung erfolgt entgegen der Rückstellkraft des Rückstellelementes mindestens einer Rückstelleinrichtung. Das Rückstellelement umfasst oder bildet eine Torsionsfeder, die mit der Schwenkeinrichtung und einem ortsfesten Halteelement koppelt. Über die Torsionsfeder kann ein Drehmoment bereitgestellt werden, wodurch die Schwenkeinrichtung und damit der Drehkörper relativ zu dem Halteelement verschwenkt werden kann. Das Halteelement ist insbesondere in fester räumlicher Beziehung zum Trägerteil positioniert. "Ortsfest" kann vorliegend insbesondere dahingehend verstanden werden, dass das Halteelement über die Antriebseinrichtung unangetrieben ist und bei der Schwenkbewegung der Schwenkeinrichtung nicht mitbewegt ist. An der Schwenkeinrichtung ist ein durch deren Schwenkbewegung relativ zum Trägerteil beweglicher Angriffspunkt oder bewegliches Anschlagelement vorhanden, an dem die Torsionsfeder angreifen kann. Bei der Umsetzung der erfindungsgemäßen Fahrzeugbehandlungsbürste in der Praxis hat sich der Einsatz einer Torsionsfeder als Rückstellelement als vorteilhaft erwiesen. Beispielsweise kann dadurch eine im Wesentlichen lineare Kennlinie des Rückstellelementes bereitgestellt werden, insbesondere wenn die Torsionsfeder unter Vorspannung steht. Die Verschwenkung kann abhängig von der Fahrzeugkontur gleichmäßig und nicht abrupt erfolgen. Dies gibt die Möglichkeit, dass die Reinigungselemente jederzeit ausreichenden, aber nicht übermäßigen Kontakt mit dem Fahrzeug haben. Dadurch kann insgesamt ein besseres Reinigungsergebnis erzielt werden.

Bei einer vorteilhaften Ausführungsform der Erfindung kann die Torsionsfeder als Schraubenfeder ausgestaltet sein.

Günstig ist es, wenn ein Kern vorgesehen ist, den die Torsionsfeder umgibt. Über den Kern kann die Torsionsfeder zuverlässig in Position gehalten werden und beispielsweise gegen ein Kippmoment gesichert werden, das beim Verformen der Torsionsfeder auftreten kann.

Von Vorteil ist es, wenn das Trägerteil den Kern umfasst oder ausbildet. Dies gibt die Möglichkeit, die Torsionsfeder über das Trägerteil zuverlässig in Position zu halten. Ein gesonderter Kern kann eingespart werden. Wicklungen der Torsionsfeder können bevorzugt mit Spiel um das Trägerteil geführt sein, um eine einfachere Verformung der Torsionsfeder zuzulassen.

Vorteilhafterweise ist die Torsionsfeder koaxial zum Trägerteil ausgerichtet.

Das ortsfeste Halteelement dient als fester Angriffspunkt für die Torsionsfeder. Dies schließt jedoch im vorliegenden Fall nicht aus, dass das Halteelement direkt oder indirekt bewegbar ist, beispielsweise um eine Zustellung der Fahrzeugbehandlungsbürste an das Fahrzeug zu ermöglichen.

Bei einer vorteilhaften Ausführungsform der Fahrzeugbehandlungsbürste bildet das Trägerteil das Halteelement aus. Ein gesondertes, zusätzliches Halteelement kann dadurch eingespart werden. Beispielsweise ist am Trägerteil mindestens eine Aufnahme gebildet, in die die Torsionsfeder mit einem Endabschnitt eingreifen kann. Zur Ausbildung des Halteelementes ist das Trägerteil vorteilhafterweise unangetrieben, worauf nachfolgend noch eingegangen wird.

Bei einer andersartigen vorteilhaften Ausführungsform kann das Halteelement am Trägerteil festgelegt sein, zum Beispiel durch Form- und/oder Kraftschluss.

Günstig ist es, wenn die Torsionsfeder unabhängig von der Position der Schwenkeinrichtung relativ zum Trägerteil innerhalb einer Kontur des Drehkörpers angeordnet ist. Darunter wird vorliegend insbesondere verstanden, dass die Torsionsfeder nicht radial, bezogen auf die Drehachse, über eine Kontur des Drehkörpers hervorragt. Dies stellt sicher, dass die Torsionsfeder nicht in Kontakt mit den Fahrzeugflächen kommen und diese beschädigen kann. Ein derartiges Problem kann beispielsweise bei der Fahrzeugbehandlungsbürste auftreten, die in der eingangs genannten DE 27 330 91 beschrieben ist.

Vorzugsweise ist die Schwenkeinrichtung relativ zum Trägerteil ausgehend von einer Grundstellung entgegen einer Vorspannung der Torsionsfeder in der Schwenkrichtung verschwenkbar. Die Torsionsfeder weist eine Vorspannung auf, die Schwenkeinrichtung in die Grundstellung zu überführen. In der Praxis erweist sich die Vorspannung als vorteilhaft, die Schwenkeinrichtung verschwenkt dadurch von Anfang an gegen die Rückstellkraft der Torsionsfeder. Ein "Wackeln" oder "Flattern" des Drehkörpers in Kontakt mit dem Fahrzeug wird dadurch vermieden und das Reinigungsergebnis verbessert.

Vorzugsweise ist die Vorspannung der Torsionsfeder veränderbar. Die Fahrzeugbehandlungsbürste ist auf diese Weise vielseitig anpassbar. Über die Vorspannung lässt sich einstellen, bei welcher Kraft des Drehkörpers gegen das Fahrzeug die Schwenkbewegung einsetzt. Umgekehrt lassen sich dadurch beispielsweise Auflagekraft der Reinigungselemente auf das Fahrzeug und/oder der Schwenkwinkel einstellen. Dadurch kann die Intensität der Abreinigung des Fahrzeugs beeinflusst werden. Bei Einsatz unterschiedlicher Reinigungselemente, die sich in ihren spezifischen Reibwerten voneinander unterscheiden, kann über die Einstellung der Vorspannung eine identische oder vergleichbare Auflagekraft erzielt werden.

Es kann vorgesehen sein, dass das Halteelement eine Mehrzahl von Aufnahmen umfasst oder bildet, in die die Torsionsfeder wahlweise eingreifen kann und dadurch in unterschiedliche Spannzustände bringbar ist. Dies gibt auf konstruktiv einfache Weise die Möglichkeit, die Vorspannung der Torsionsfeder zu ändern.

Bei einer vorteilhaften Ausführungsform der Fahrzeugbehandlungsbürste kann vorgesehen sein, dass der Drehkörper über die Schwenkeinrichtung in zwei einander entgegengesetzte Schwenkrichtungen verschwenkbar ist. Dies erweist sich besonders dann als vorteilhaft, wenn der Drehkörper zur Rotation in unterschiedliche Drehrichtungen angetrieben werden kann, was von Vorteil für das Reinigungsergebnis ist. Je nachdem, in welche Drehrichtung der Drehkörper rotiert, kann über die Reinigungselemente ein Drehmoment auf die Schwenkeinrichtung zum Verschwenken in einer der beiden Schwenkrichtungen ausgeübt werden. Die bereits erwähnten Vorteile lassen sich dadurch beim Verschwenken der Schwenkeinrichtung sowohl in der einen Schwenkrichtung als auch in der anderen Schwenkrichtung erzielen.

Der Schwenkwinkel, um den der Drehkörper über die Schwenkeinrichtung relativ zum Trägerteil verschwenkbar ist, kann begrenzt sein. Beispielsweise beträgt ein maximaler Schwenkwinkel, in jede Schwenkrichtung, ungefähr 180°.

Die Begrenzung des Schwenkwinkels kann durch ein ortsfestes Anschlagelement erfolgen, an dem die Schwenkeinrichtung beim Verschwenken anschlägt.

Es können beim Verschwenken in beide Schwenkrichtungen zwei Anschlagelemente vorhanden sein, oder das Anschlagelement kann abhängig von der Drehrichtung des Drehkörpers unterschiedlich positionierbar sein.

Der Schwenkwinkel kann bei einer vorteilhaften Ausführungsform über die mindestens eine Rückstelleinrichtung des Bürstensegmentes beeinflusst werden.

Von Vorteil ist es, wenn die Rückstelleinrichtung ein Anschlagelement für die Torsionsfeder umfasst, an dem diese bei Einnahme einer Grundstellung durch die Schwenkeinrichtung derart anschlägt, dass in der Grundstellung keine Federkraft über die Torsionsfeder auf die Schwenkeinrichtung ausgeübt wird, und wenn die Schwenkeinrichtung ausgehend von der Grundstellung in die entgegengesetzte Schwenkrichtung verschwenkbar ist. Bei beidseitiger Schwenkmöglichkeit, wie vorstehend erwähnt, kann die Grundstellung der Schwenkeinrichtung relativ zum Trägerteil dadurch besser definiert werden, dass bei Einnahme der Grundstellung durch die Schwenkeinrichtung keine Rückstellkraft ausgeübt wird. Die Schwenkeinrichtung kann allerdings in die entgegengesetzte Schwenkrichtung verschwenkt werden, wobei die Torsionsfeder nicht weiter belastet wird.

Die zuletzt erwähnte Ausführungsform kommt insbesondere dann zum Einsatz, wenn das Bürstensegment bei einer bevorzugten Ausführungsform zwei Rückstelleinrichtungen umfasst, wobei der Drehkörper über die Schwenkeinrichtung relativ zum Trägerteil in zwei einander entgegengesetzte Schwenkrichtungen verschwenkbar ist, entgegen der Wirkung eines jeweiligen Rückstellelementes einer Rückstelleinrichtung. Eine Verschwenkung des Drehkörpers über die Schwenkeinrichtung ist in jede der beiden Schwenkrichtungen möglich, entgegen der Wirkung eines jeweiligen Rückstellelementes. Eine derartige Fahrzeugbehandlungsbürste eignet sich besonders, wenn der Drehkörper wie erwähnt in beiderlei Drehrichtungen angetrieben werden kann, wobei abhängig von der Drehrichtung ausgehend von der Grundstellung eine Verschwenkung in eine der beiden Schwenkrichtungen möglich ist.

Optional kann bei einer Fahrzeugbehandlungsbürste der eingangs genannten Art zur Begründung einer eigenständigen Erfindung bevorzugt vorgesehen sein, dass das Bürstensegment zwei Rückstelleinrichtungen umfasst, wobei der Drehkörper über die Schwenkeinrichtung relativ zum Trägerteil in zwei einander entgegengesetzte Schwenkrichtungen verschwenkbar ist, entgegen der Wirkung eines jeweiligen Rückstellelementes einer Rückstelleinrichtung.

Bevorzugt erfolgt die Verschwenkung in beiden Schwenkrichtungen entgegen der Vorspannung eines jeweiligen Rückstellelementes.

Die Rückstelleinrichtungen sind vorzugsweise funktionsgleich ausgestaltet.

Beispielsweise sind die Rückstelleinrichtungen axial auf einander gegenüberliegenden Seiten der Schwenkeinrichtungen angeordnet, d.h. im bestimmungsgemäßen Gebrauch insbesondere oberhalb des Drehkörpers und unterhalb des Drehkörpers, bezogen auf die Schwenkachse.

Vorzugsweise sind beide Rückstellelemente als Torsionsfedern ausgestaltet, die mit der Schwenkeinrichtung einerseits und einem jeweiligen ortsfesten Halteelement andererseits koppeln.

Die von den Torsionsfedern auf die Schwenkeinrichtung ausübbaren Drehmomente sind vorzugsweise einander entgegengerichtet.

Günstig ist es, wenn die Torsionsfedern bei Einnahme der Grundstellung durch die Schwenkeinrichtung an einem jeweiligen Anschlagelement wie vorstehend erläutert anschlagen. In der Grundstellung der Schwenkeinrichtung wird vorteilhafterweise über keine der Torsionsfedern eine Rückstellkraft auf die Schwenkeinrichtung ausgeübt, um die Grundstellung relativ zum Trägerteil besser zu definieren. Vorteilhafterweise liegen die Torsionsfedern am jeweiligen Anschlagelement unter Vorspannung an. Die Verschwenkung in jeder der Schwenkrichtungen führt zu einer Rückstellkraft einer der Torsionsfedern. Entfällt das Drehmoment auf den Drehkörper, wirkt ein rückstellendes Drehmoment von der Torsionsfeder auf die Schwenkeinrichtung.

Bevorzugt ist die Schwenkeinrichtung in der Grundstellung frei von über die Torsionsfedern ausübbaren Rückstellkräften bzw. Drehmomenten.

Günstig ist es, wenn zwei oder mehr Bürstensegmente eine Schwenkeinrichtung mit einem Drehkörper umfassen, wobei die Drehkörper unabhängig voneinander über die jeweilige Schwenkeinrichtung um die Schwenkachse relativ zum Trägerteil verschwenkbar sind. Auf diese Weise ist eine noch bessere Anpassung der Fahrzeugbehandlungsbürste an die Kontur des Fahrzeugs möglich. Vorteilhafterweise umfassen alle Bürstensegmente eine Schwenkeinrichtung mit einem Drehkörper, der über die jeweilige Schwenkeinrichtung relativ zum Trägerteil verschwenkbar ist.

Vorteilhafterweise umfasst ein jeweiliges Bürstensegment mindestens eine Rückstelleinrichtung und besonders bevorzugt zwei Rückstelleinrichtungen. Die vorstehend erwähnten Vorteile können dadurch bei jedem Bürstensegment erzielt werden.

Günstig ist es, wenn das Trägerteil unangetrieben ist. Vorliegend kann unter "unangetrieben" insbesondere verstanden, dass das Trägerteil über die Antriebseinrichtung nicht in Drehung um die Schwenkachse versetzt wird. Das Trägerteil kann, beispielsweise abweichend von der in der DE 27 33 091 angesetzten Antriebswelle, trotz der Rotation des Drehkörpers unbewegt bleiben. Dies bietet insbesondere die Möglichkeit, die Halterung der Bürstensegmente am Trägerteil, die Antriebseinrichtung zum Rotieren des mindestens einen Drehkörpers und die mindestens eine Rückstelleinrichtung unabhängig voneinander zu optimieren. Beispielsweise kann über das Trägerteil der Fahrzeugbehandlungsbürste eine erforderliche Struktur und ein Halt verliehen werden, wobei die bewegte Masse aufgrund des unangetriebenen Trägerteils verhältnismäßig gering gehalten werden kann. Auch dessen Masse kann gering gehalten werden, weil über das Trägerteil nur Haltekräfte aufzubringen sind, aber kein Drehmoment zu übertragen ist. Hierzu ist es insbesondere besonders vorteilhaft, wenn das Trägerteil einen Hohlkörper ausbildet, zum Beispiel ein Trägerrohr. "Unangetrieben" schließt jedoch im vorliegenden Fall nicht aus, dass das Trägerteil passiv oder aktiv mittels eines Stellorgans bewegt werden kann, um eine Zustellung der Fahrzeugbehandlungsbürste an das Fahrzeug zu ermöglichen. Hierbei kann es sich zum Beispiel um eine Neigung der Fahrzeugbehandlungsbürste handeln, um deren Grobanpassung an die Kontur des Fahrzeuges bei der Zustellung zu ermöglichen, und/oder um eine Verschiebung der Fahrzeugbehandlungsbürste.

Günstigerweise sind die Bürstensegmente zur Erzielung einer einfachen Konstruktion identisch ausgestaltet. Insbesondere die jeweiligen Rückstelleinrichtungen können identisch ausgestaltet sein.

Bei einer vorteilhaften Umsetzung der Fahrzeugbehandlungsbürste kann vorgesehen sein, dass die Drehkörper von zwei oder mehr Bürstensegmenten mittels eines Antriebsmotors der Antriebseinrichtung antreibbar sind. Mit nur einem Antriebsmotor können zwei oder mehr Drehkörper angetrieben werden. Denkbar ist, dass die Drehkörper aller Bürstensegmente mittels nur eines Antriebsmotors angetrieben werden können.

Bei einer andersartigen vorteilhaften Ausführungsform kann vorgesehen sein, dass die Antriebseinrichtung eine Mehrzahl von Antriebsmotoren umfasst und dass jedem Bürstensegment ein Antriebsmotor zum Antreiben des jeweiligen Drehkörpers zugeordnet ist. Dies ermöglicht es, die Drehkörper der verschiedenen Bürstensegmente individuell anzutreiben. Beispielsweise ist dadurch die Möglichkeit gegeben, die Drehkörper der Bürstensegmente mit unterschiedlicher Geschwindigkeit anzutreiben, so dass die von den Reinigungselementen des jeweiligen Bürstensegmentes erfassten Fahrzeugbereiche zum Beispiel mit unterschiedlicher Intensität abgereinigt werden können. Beispielsweise erfolgt an unteren Fahrzeugbereichen, an denen aufgrund der Bodennähe üblicherweise größere Verschmutzungen vorhanden sind als an bodenfernen Fahrzeugbereichen, eine schnellere Rotation des Drehkörpers und infolge dessen eine intensivere Abreinigung des Fahrzeugs. Bevorzugt sind die Antriebsmotoren zur Einstellung der Drehzahl des jeweiligen Drehkörpers einstellbar.

Die Schwenkachse und die Drehachse bzw. die Drehachsen, sofern eine Mehrzahl von wie vorliegend beschriebenen Drehkörpern vorhanden sind, sind günstigerweise parallel zueinander ausgerichtet.

Im vorliegenden Fall kann unter der Verschwenkung des Drehkörpers relativ zum Trägerteil auch eine Verschwenkung der diesen umfassenden Schwenkeinrichtung relativ zum Trägerteil verstanden werden, und umgekehrt.

Günstig erweist es sich, wenn die Schwenkeinrichtung mindestens einen um die Schwenkachse schwenkbaren Schwenkkörper umfasst, relativ zu dem der Drehkörper drehbeweglich ausgestaltet ist, wobei der mindestens eine Schwenkkörper mit dem Drehkörper gekoppelt ist und die Rückstellkraft der Torsionsfeder am mindestens einen Schwenkkörper angreift. Der mindestens eine Schwenkkörper und der Drehkörper bilden Mitnehmer füreinander zum Verschwenken aus. Bei einer hervorspringenden Fahrzeugkontur wird über die Reinigungselemente auf den Drehkörper ein Drehmoment ausgeübt. Dies führt dazu, dass der Drehkörper über den mindestens einen Schwenkkörper verschwenkt wird, wobei die Drehbewegung des Drehkörpers aufgrund der drehbeweglichen Ausgestaltung aufrechterhalten werden kann. Entfällt das Drehmoment, erfolgt eine Rückverschwenkung des Drehkörpers dadurch, dass die Rückstellkraft direkt oder indirekt auf den Schwenkkörper ausgeübt wird, der den Drehkörper bei der Schwenkbewegung mitnimmt.

Vorteilhafterweise umfasst die Schwenkeinrichtung mindestens ein Lagerelement, über das der mindestens eine Schwenkkörper und der Drehkörper aneinander gelagert sind. Das Lager kann ein Kugellager oder ein Gleitlager sein, wobei sich ein mittels eines Kugellagers vermittelter Reibschluss zwischen dem Drehkörper und dem Schwenkkörper als vorteilhaft erwiesen hat. Beispielsweise kommt ein Axiallager mittels eines Lagerrings zum Einsatz, über den der mindestens eine Schwenkkörper auf dem Drehkörper aufliegt.

Insbesondere bei der zuletzt erwähnten vorteilhaften Ausführungsform ist günstigerweise vorgesehen, dass der mindestens eine Schwenkkörper ein Abdeckelement umfasst oder ausbildet, das den Drehkörper quer zur Drehachse überdeckt. Dies erweist sich bei einer gehäuseartigen Ausgestaltung der Schwenkeinrichtung als vorteilhaft, um den Eintritt von Schmutz und Reinigungsflüssigkeit in das Gehäuse zu vermeiden.

Der mindestens eine Schwenkkörper ist bei einer vorteilhaften Ausführungsform plattenförmig ausgestaltet.

Günstig ist es, wenn die Schwenkeinrichtung zwei axial auf einander abgewandten Seiten des Drehkörpers angeordnete Schwenkkörper umfasst. Die Schwenkkörper können axial voneinander beabstandet sein, wobei der Drehkörper zwischen ihnen angeordnet ist und vorteilhafterweise ein jeweiliges Lagerelement zwischen einem Schwenkkörper und dem Drehkörper vorgesehen ist.

Bevorzugt bildet die Schwenkeinrichtung ein Gehäuse aus mit einer vom Drehkörper gebildeten Außenwand und von den Schwenkkörpern gebildeten Deckwänden, wobei das Trägerteil das Gehäuse durchgreift. Durch die gehäuseartige Ausgestaltung wird der Eintritt von Schmutz und Reinigungsflüssigkeit erschwert und dadurch eine zuverlässige Funktion der Fahrzeugbehandlungsbürste gewährleistet. Beispielsweise ist der Drehkörper ein Hohlrad, das über ein im Inneren des Gehäuses angeordnetes Antriebselement angetrieben ist.

Von Vorteil ist es, wenn die Schwenkeinrichtung ein Lagerelement umfasst, über das der mindestens eine Schwenkkörper am Trägerteil oder an einem dieses umgebenden hülsenförmigen Lagerkörper des Bürstensegmentes gelagert ist. Das Lagerelement, insbesondere ein Radiallager, kann als Kugellager oder als Gleitlager ausgestaltet sein. Denkbar ist, dass eine direkte Lagerung des mindestens einen Schwenkkörpers am Trägerteil über das Lagerelement erfolgt. Möglich ist auch eine indirekte Lagerung, wobei der mindestens eine Schwenkkörper am Lagerkörper gelagert ist, der seinerseits das Trägerteil umgibt.

Der Lagerkörper kann einteilig oder mehrteilig ausgestaltet sein.

Der Einsatz eines Lagerkörpers erweist sich zum Beispiel als vorteilhaft bei der Montage und bei der Wartung der Fahrzeugbehandlungsbürste. Aufgrund von etwaigen Toleranzen bei der Fertigung lässt sich die Schwenkeinrichtung auf einfachere Weise montieren, wenn der Lagerkörper das Trägerteil mit Spiel umgibt. In radialer Richtung kann Spiel zwischen dem Lagerkörper und dem Trägerteil vorhanden sein, um Fertigungstoleranzen auszugleichen und die Schwenkeinrichtung und das Lagerelement auf einfachere Weise am Trägerteil anzubringen. Im Falle von Verschleiß kann zum Beispiel der Lagerkörper entfernt und getauscht oder aufbereitet werden, so dass eine Wartung des Trägerteils unterbleiben kann.

Als vorteilhaft erweist es sich, wenn der Lagerkörper axial durch Form- und/oder Kraftschluss relativ zum Trägerteil unbeweglich fixiert ist.

Günstig ist es, wenn das Bürstensegment mindestens einen axial, bezogen auf die Schwenkachse, neben dem mindestens einen Schwenkkörper oder dem Lagerkörper angeordneten, am Trägerteil festgelegten Haltekörper umfasst, an dem der mindestens eine Schwenkkörper oder der Lagerkörper über mindestens ein Lagerelement axial und/oder radial gelagert ist.

Der mindestens eine Schwenkkörper oder der Lagerkörper kann sich über das mindestens eine Lagerelement in axialer und/oder radialer Richtung am mindestens einen Haltekörper abstützen, wodurch eine zuverlässige Fixierung erfolgt. Das Lagerelement kann ein Kugellager oder ein Gleitlager sein und als Axiallager oder als Radiallager ausgestaltet sein.

Bei einer vorteilhaften Ausführungsform ist ein zwischen dem mindestens einen Schwenkkörper und dem Lagerkörper angeordnetes Radiallager in Form eines Kugellagers vorgesehen und ein zwischen dem Lagerkörper und dem mindestens einen Haltekörper angeordnetes als Kugellager ausgestaltetes Radiallager. Der Haltekörper kann das Lagerelement außenseitig überfangen. Der Eintritt von Schmutz und Reinigungsflüssigkeit kann dadurch erschwert werden. Der mindestens eine Haltekörper kann durch Kraftschluss und/oder Formschluss am Trägerteil festgelegt sein.

Als günstig erweist es sich, wenn das Bürstensegment zwei Haltekörper umfasst, die axial auf einander gegenüberliegenden Seiten des Drehkörpers angeordnet sind. Insbesondere kann bei Vorhandensein von zwei Schwenkkörpern wie vorstehend erläutert jeweils ein Haltekörper vorgesehen sein. Der Lagerkörper kann sich von dem ersten Haltekörper in axialer Richtung bis zum zweiten Haltekörper erstrecken.

Von Vorteil ist es, wenn das Trägerteil als Trägerrohr ausgestaltet ist. Die Masse des Trägerteils kann dadurch gering gehalten werden. Dennoch kann dem Trägerteil und damit der Fahrzeugbehandlungsbürste eine robuste Struktur verliehen werden.

Das Trägerrohr weist vorzugsweise einen runden Querschnitt und insbesondere kreisförmigen Querschnitt auf, wobei jedoch auch andersartige Querschnitte vorgesehen sein können (Mehrkant, unrund ...).

Bei einer vorteilhaften Ausführungsform der Fahrzeugbehandlungsbürste umfasst die Antriebseinrichtung mindestens einen Antriebsmotor und mindestens ein von diesem angetriebenes, im Trägerrohr angeordnetes Antriebsrad, das exzentrisch zur Schwenkachse ausgerichtet ist und das mindestens eine im Trägerrohr gebildete Durchgangsöffnung abschnittsweise durchgreift, wobei das mindestens eine Antriebsrad mit dem Drehkörper in Wirkverbindung steht. Dies bietet die Möglichkeit eines innenliegenden, im Trägerrohr angeordneten und gegenüber äußeren Einflüssen geschützten Antriebs. Das Antriebsrad ist zumindest abschnittsweise innerhalb des Trägerrohrs positioniert und exzentrisch zur Schwenkachse angeordnet. Dies erlaubt es, dass ein Abschnitt des Antriebsrads die Durchgangsöffnung im Trägerrohr durchgreift. Das Antriebsrad kann direkt oder indirekt, insbesondere über ein weiteres Rad, mit dem Drehkörper wirkverbunden sein.

Vorteilhafterweise ist vorgesehen, dass das Bürstensegment mindestens ein Kopplungsrad mit einer Innenseite und einer Außenseite umfasst, wobei das mindestens eine Antriebsrad an der Innenseite mit dem mindestens einen Kopplungsrad in Eingriff steht, und wobei der Drehkörper als Hohlrad ausgestaltet ist, dessen Innenseite mit der Außenseite des mindestens einen Kopplungsrades in Eingriff steht. Das Kopplungsrad ermöglicht eine Übertragung der Antriebskraft vom Antriebsrad auf den Drehkörper. Zu diesem Zweck umgibt das Kopplungsrad das Trägerteil und ist an der Innenseite vom Antriebsrad angetrieben, wobei es an der Außenseite mit dem Drehkörper in Eingriff steht.

Der Einsatz eines Antriebsrades zusammen mit dem Kopplungsrad ermöglicht es beispielsweise, den auf den Drehkörper übertragbaren Drehmomentbereich auf einfache Weise zu variieren, ohne dass hierfür die Schwenkeinrichtung abgeändert werden muss. Die Übersetzung und damit der am Drehkörper anliegende Drehmomentbereich kann auf einfache Weise durch einen Tausch des Antriebsrades und des Kopplungsrades erfolgen.

Als vorteilhaft erweist es sich, wenn das mindestens eine Antriebsrad mit dem mindestens einen Kopplungsrad über eine Verzahnung in Eingriff steht und/oder wenn das mindestens eine Kopplungsrad mit dem mindestens einen Drehkörper über eine Verzahnung in Eingriff steht.

Günstig ist es, wenn das mindestens eine Kopplungsrad koaxial zum Trägerrohr ausgerichtet ist.

Eine vorteilhafte Ausführungsform der Fahrzeugbehandlungsbürste sieht vor, dass das Bürstensegment mindestens einen das Trägerrohr umgebenden hülsenförmigen Lagerkörper umfasst, der das mindestens eine Kopplungsrad umfasst oder ausbildet oder an dem das mindestens eine Kopplungsrad festgelegt ist. Hierbei handelt es sich insbesondere um den vorstehend erwähnten hülsenförmigen Lagerkörper, an dem der mindestens eine Schwenkkörper der Schwenkeinrichtung gelagert sein kann.

Zum Antreiben des mindestens einen Antriebsrades erweist es sich als vorteilhaft, wenn die Antriebseinrichtung mindestens eine Antriebswelle umfasst, die von dem mindestens einen Antriebsmotor angetrieben ist und an der das mindestens eine Antriebsrad drehfest gehalten ist.

Bei einer vorteilhaften Ausführungsform ist es günstig, wenn eine Antriebswelle vorgesehen ist, an der eine Mehrzahl von Antriebsrädern drehfest gehalten ist, wobei über ein jeweiliges Antriebsrad ein jeweiliger Drehkörper der Bürstensegmente antreibbar ist. Wie vorstehend erwähnt kann eine Mehrzahl von Bürstensegmenten mit antreibbaren Drehkörpern vorgesehen sein. Bei zumindest zwei und insbesondere allen solchen Bürstensegmenten kann bei der vorliegenden Ausführungsform eine gemeinsame Antriebswelle zum Einsatz kommen. An der Antriebswelle ist eine Mehrzahl von Antriebsrädern gehalten, um den jeweiligen Drehkörper anzutreiben.

Bei einer andersartigen vorteilhaften Ausführungsform ist es günstig, wenn die Antriebseinrichtung eine Mehrzahl von Antriebsmotoren umfasst, die ein jeweiliges Antriebsrad antreiben, wobei einem jeweiligen Bürstensegment ein Antriebsmotor zum Antreiben von dessen Drehkörper zugeordnet ist. Die jeweils einen drehbaren Drehkörper aufweisenden Bürstensegmente können dadurch individuell angetrieben werden, einschließlich der Möglichkeit unterschiedlicher Drehzahlen. Insbesondere kann ein jeweiliger Antriebsmotor im Trägerrohr angeordnet sein und einem Bürstensegment zugeordnet sein, dessen Drehkörper er antreibt.

Für eine zuverlässige Funktion der Fahrzeugbehandlungsbürste erweist es sich als vorteilhaft, wenn die mindestens eine Antriebswelle im Trägerrohr über mindestens eine Lagerbuchse drehbar gelagert ist. Zur Lagerung der Antriebswelle kann die Lagerbuchse ein Lagerelement umfassen oder ausbilden. Das Lagerelement kann ein Gleitlager oder ein Kugellager sein.

Die mindestens eine Lagerbuchse ist vorteilhafterweise über mindestens ein das Trägerrohr von außen nach innen durchgreifendes Fixierelement an diesem festgelegt. Auf diese Weise besteht die Möglichkeit einer einfachen Montage der Fahrzeugbehandlungsbürste, bei der die mindestens eine Lagerbuchse von außen mittels mindestens eines Fixierelementes am Trägerrohr festgelegt werden kann.

In entsprechender Weise kann bei einem im Trägerrohr angeordneten Antriebsmotor vorgesehen sein, dass ein jeweiliger Antriebsmotor im Trägerrohr über mindestens ein das Trägerrohr von außen nach innen durchgreifendes Fixierelement an diesem festgelegt ist.

Vorstehend wurde bereits auf den mindestens einen Haltekörper eingegangen zur axialen und/oder radialen Lagerung des mindestens einen Schwenkkörpers oder des Lagerkörpers.

Vorteilhafterweise ist über das mindestens eine Fixierelement ein Haltekörper am Trägerrohr festgelegt, an dem sich die Schwenkeinrichtung oder ein Lagerkörper axial und/oder radial abstützt. Die Abstützung kann über ein Lagerelement, ausgestaltet als Kugellager oder als Gleitlager, erfolgen.

Bei einer vorteilhaften Ausführungsform der Fahrzeugbehandlungsbürste kann vorgesehen sein, dass das Bürstensegment einen an der Schwenkeinrichtung gehaltenen Antriebsmotor umfasst und ein von diesem angetriebenes Antriebsrad, das mit dem Drehkörper des Bürstensegmentes direkt oder indirekt in Wirkverbindung steht. Dies bietet insbesondere die Möglichkeit, einem jeweiligen Bürstensegment mit Schwenkeinrichtung und Drehkörper einen Antriebsmotor zuzuordnen und die Drehkörper individuell anzutreiben. Der Antriebsmotor ist an der Schwenkeinrichtung gehalten und kann zusammen mit dieser relativ zum Trägerteil verschwenkt werden.

Vorteilhafterweise ist der Drehkörper als Hohlrad ausgestaltet, wobei eine Außenseite des Antriebsrads innenseitig am Drehkörper abrollt.

Günstig ist es, wenn das Antriebsrad mit dem Drehkörper über eine Verzahnung in Eingriff steht.

Als vorteilhaft erweist es sich, wenn der Antriebsmotor auf einem oder in einem von der Schwenkeinrichtung gebildeten Gehäuse positioniert ist, das einen Aufnahmeraum bildet, in den/dem eine Antriebswelle des Antriebsmotors eingreift/angeordnet ist, an der das Antriebsrad drehfest gehalten ist. Der Aufnahmeraum ist ein Innenraum des Gehäuses. Das Gehäuse schützt vor Schmutz und Reinigungsflüssigkeit.

Die Fahrzeugbehandlungsbürste kann eine Seitenbürste oder eine Dachbürste sein.

Die Reinigungselemente können Borsten, Waschstreifen oder Polierstreifen sein, d. h. streifenförmige Waschelemente oder streifenförmige Polierelemente.

Die eingangs genannte Aufgabe wird durch eine erfindungsgemäße Fahrzeugbehandlungsanlage gelöst, umfassend mindestens eine Fahrzeugbehandlungsbürste, insbesondere Waschbürste, nach einem der voranstehenden Ansprüche.

Die Vorteile, die bereits im Zusammenhang mit der Erläuterung der erfindungsgemäßen Fahrzeugbehandlungsbürste erwähnt wurden, können bei der Fahrzeugbehandlungsanlage ebenfalls erzielt werden. Diesbezüglich kann auf die voranstehenden Ausführungen verwiesen werden.

Vorteilhafte Ausführungsformen der erfindungsgemäßen Fahrzeugbehandlungsanlage ergeben sich durch vorteilhafte Ausführungsformen der erfindungsgemäßen Fahrzeugbehandlungsbürste.

Die Fahrzeugbehandlungsanlage kann eine Portalanlage oder eine Behandlungsstraße sein.

Die Fahrzeugbehandlungsanlage kann mindestens ein Stellorgan aufweisen zum Bewegen der Fahrzeugbehandlungsbürste relativ zum Fahrzeug. Beispielsweise ist eine Verschiebung in Längsrichtung und/oder Querrichtung des Fahrzeuges möglich. Alternativ oder ergänzend ist ein Neigen oder ein Kippen der Fahrzeugbehandlungsbürste relativ zur Vertikalen vorgesehen, um bei der Zustellung der Fahrzeugbehandlungsbürste bereits eine Grobanpassung an die Kontur des Fahrzeuges vorzunehmen.

Die nachfolgende Beschreibung vorteilhafter Ausführungsformen der Erfindung dient im Zusammenhang mit der Zeichnung der näheren Erläuterung der Erfindung. Es zeigen:
- Figur 1:: eine schematische Ansicht einer erfindungsgemäßen Fahrzeugbehandlungsanlage, ausgestaltet als Portalwaschanlage, umfassend eine erfindungsgemäße Fahrzeugbehandlungsbürste in Gestalt einer Fahrzeugwaschbürste mit mehreren Bürstensegmenten beim Reinigen eines Kleinfahrzeuges;
- Figur 2:: die Fahrzeugwaschanlage aus Figur 1 beim Reinigen eines Lieferwagens;
- Figur 3:: eine Teildarstellung der Fahrzeugwaschbürste in perspektivischer Ansicht, in der ein Bürstensegment vollständig und drei Bürstensegmente nur teilweise dargestellt sind;
- Figur 4:: das Bürstensegment der Fahrzeugwaschbürste aus Figur 3 unter Ausblendung einiger Reinigungselemente;
- Figur 5:: das Bürstensegment aus Figur 4 in perspektivischer Teildarstellung, gezeigt in einer Explosionsansicht;
- Figur 6:: eine Längsschnittansicht des Bürstensegments aus Figur 4 unter Ausblendung von Reinigungselementen;
- Figur 7:: eine perspektivische Teilansicht des Bürstensegmentes, die eine Rückstelleinrichtung zeigt;
- Figur 8:: eine weitere perspektivische Teilansicht des Bürstensegmentes, die eine weitere Rückstelleinrichtung zeigt;
- Figur 9:: eine Draufsicht auf das Bürstensegment in axialer Richtung, wobei Reinigungselemente ein (angedeutetes) Fahrzeug zum Reinigen kontaktieren;
- Figur 10:: eine Darstellung entsprechend Figur 9, wobei ein Abstand des Fahrzeugs von einem Trägerteil der Fahrzeugwaschbürste verringert ist und ein Drehkörper des Bürstensegmentes relativ zum Trägerteil verschwenkt ist;
- Figur 11:: eine Darstellung entsprechend Figur 9, wobei ein Abstand des Fahrzeuges vom Trägerteil weiter verringert ist und der Drehkörper relativ zum Trägerteil weiter verschwenkt ist;
- Figur 12:: eine Darstellung entsprechend Figur 9, wobei ein Abstand des Fahrzeuges vom Trägerteil noch weiter verringert ist und der Drehkörper relativ zum Trägerteil noch weiter verschwenkt ist;
- Figur 13:: eine Draufsicht auf das Bürstensegment in axialer Richtung, wobei Reinigungselemente ein (angedeutetes) Fahrzeug zum Reinigen kontaktieren, wobei ein Drehkörper des Bürstensegmentes im Verhältnis zur Darstellung in Figur 9 in umgekehrter Richtung dreht;
- Figur 14:: eine Darstellung entsprechend Figur 13, wobei ein Abstand des Fahrzeugs von einem Trägerteil der Fahrzeugwaschbürste verringert ist und der Drehkörper relativ zum Trägerteil verschwenkt ist;
- Figur 15:: eine Darstellung entsprechend Figur 13, wobei ein Abstand des Fahrzeuges vom Trägerteil weiter verringert ist und der Drehkörper relativ zum Trägerteil weiter verschwenkt ist;
- Figur 16:: eine Darstellung entsprechend Figur 13, wobei ein Abstand des Fahrzeuges vom Trägerteil noch weiter verringert ist und der Drehkörper relativ zum Trägerteil noch weiter verschwenkt ist;
- Figur 17:: eine Darstellung entsprechend Figur 6 bei einer zweiten bevorzugten Ausführungsform der erfindungsgemäßen Fahrzeugbehandlungsbürste;
- Figur 18:: eine Darstellung entsprechend Figur 7 bei der zweiten bevorzugten Ausführungsform;
- Figur 19:: eine Darstellung entsprechend Figur 6 bei einer dritten bevorzugten Ausführungsform der erfindungsgemäßen Fahrzeugbehandlungsbürste; und
- Figur 20:: eine Darstellung entsprechend Figur 6 bei einer vierten bevorzugten Ausführungsform der erfindungsgemäßen Fahrzeugbehandlungsbürste.

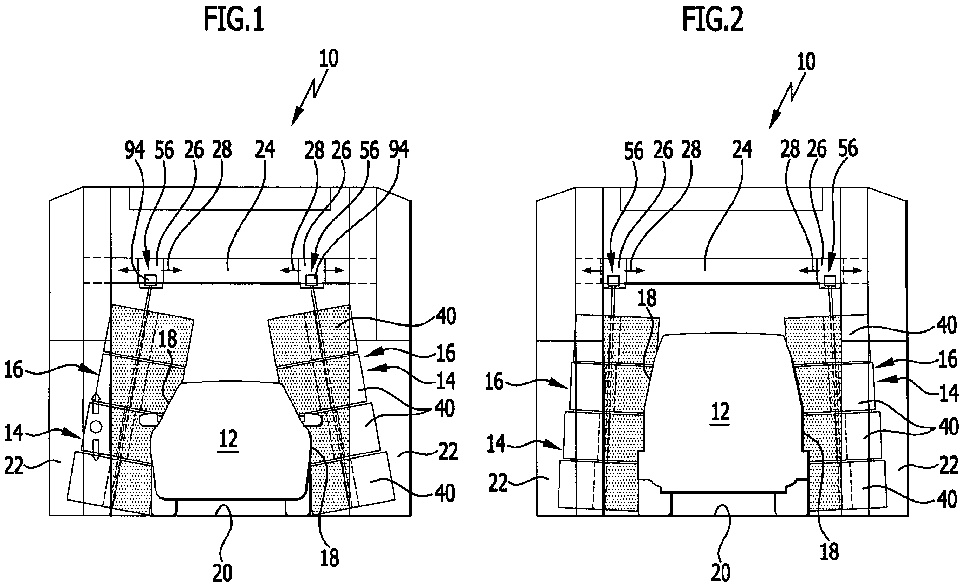

Die Figuren 1 und 2 zeigen schematisch eine bevorzugte Ausführungsform einer erfindungsgemäßen Fahrzeugbehandlungsanlage, ausgestaltet als Portalwaschanlage 10 (nachfolgend: Waschanlage) zum Reinigen und insbesondere Waschen eines Fahrzeugs 12. Beispielhaft zeigen die Figuren 1 und 2 als Fahrzeug 12 ein Kleinfahrzeug bzw. einen Lieferwagen, die sich hinsichtlich ihrer Kontur voneinander unterscheiden. Quer zur Fahrzeuglängsrichtung betrachtet weist das Kleinfahrzeug eine ungefähr trapezförmige Kontur auf, wohingegen der Lieferwagen eine eher rechteckförmige Kontur aufweist.

Zur verbesserten Reinigung von Fahrzeugen 12 auch unterschiedlicher Konturen umfasst die Waschanlage 10 zwei Exemplare einer bevorzugten Ausführungsform einer erfindungsgemäßen Fahrzeugbehandlungsbürste, die vorliegend ausgestaltet ist als Fahrzeugwaschbürste 14 (nachfolgend Waschbürste 14). Die Waschbürste 14 ist eine Seitenbürste 16 zur Reinigung seitlicher Fahrzeugflächen 18 des Fahrzeuges 12. Bei einer andersartigen Umsetzung der Erfindung kann als erfindungsgemäße Waschbürste 14 auch eine "Dach"bürste zur Reinigung obenliegender Fahrzeugbereiche vorgesehen sein, insbesondere des Daches.

Die Waschbürsten 14 sind in funktioneller Hinsicht gleichartig und symmetrisch zueinander ausgestaltet, so dass nachfolgend nur auf eine Waschbürste 14 eingegangen wird.

Die Waschanlage 10 umfasst zwei auf einer Aufstellfläche 20 positionierte und relativ zum Fahrzeug 12 in dessen Längsrichtung bewegbare Vertikalträger 22. Die Vertikalträger 22 sind miteinander über einen Querträger 24 verbunden, der zusammen mit den Vertikalträgern 22 relativ zum Fahrzeug 12 bewegt werden kann.

Die Waschbürsten 14 sind am Querträger 24 mittels mindestens eines Stellorgans 26 positionsveränderlich gehalten. Insbesondere können die Waschbürsten 14 über das Stellorgan quer zur Fahrzeugrichtung, symbolisiert durch Pfeile 28, am Querträger 24 verschoben werden.

Darüber hinaus kann die Neigung der am Stellorgan 26 festgelegten Waschbürste 14 relativ zur Vertikalen mittels des Stellorgans 26 eingestellt werden. Auf diese Weise und unter zusätzlichem Verschieben der Waschbürste 14 ist es möglich, die Waschbürste 14 beim Zustellen an das Fahrzeug 12 in an sich bekannter Weise näherungsweise an die Kontur des Fahrzeuges 12 anzupassen.

Während bei dem Kleinfahrzeug in Figur 1 eine stärkere Neigung der Waschbürste 14 relativ zur Vertikalen erforderlich ist und ein in Querrichtung 28 geringerer Abstand zwischen den Waschbürsten 14, zeigt Figur 2 aufgrund der eher rechteckförmigen Kontur des Lieferwagens nur geringfügig bezüglich der Vertikalen geneigte Waschbürsten 14, die ferner einen größeren Abstand als im Beispiel der Figur 1 zueinander einnehmen.

Bei einer andersartigen vorteilhaften Ausgestaltung kann eine erfindungsgemäße Fahrzeugbehandlungsanlage vorgesehen sein, die als Behandlungsstraße und insbesondere Waschstraße für das Fahrzeug 12 ausgestaltet ist. Das Fahrzeug 12 kann dabei mittels einer Fördervorrichtung relativ zu den Waschbürsten 14 bewegt werden.

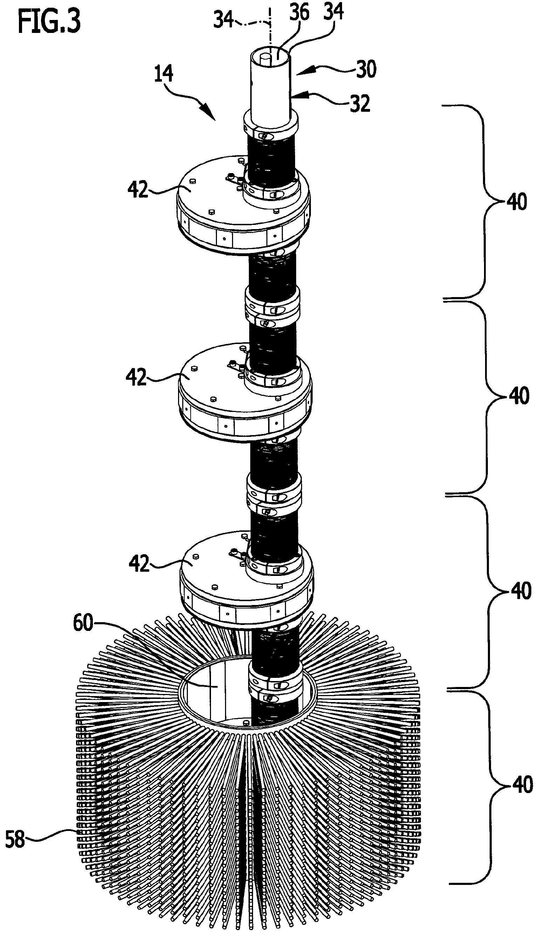

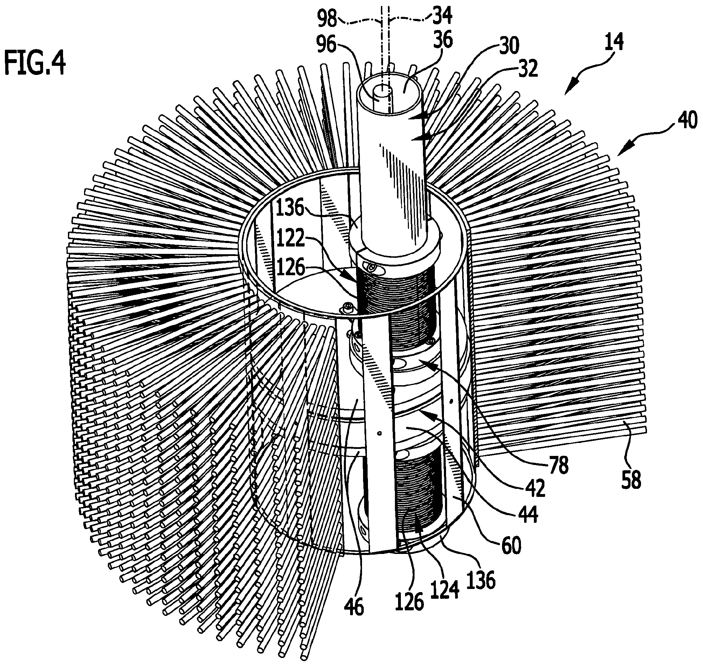

Mit der erfindungsgemäßen Waschbürste 14 kann bei der Reinigung des Fahrzeuges 12 ein gutes Reinigungsergebnis erzielt werden, denn die Waschbürste 14 kann sich, zumindest innerhalb gewisser Grenzen, an die Kontur des Fahrzeuges 12 anpassen, wodurch konvexe Wölbungen oder konkave Ausnehmungen in der Kontur auf bessere Weise von den Reinigungselementen erfasst und abgereinigt werden können. Nachfolgend wird unter Verweis auf die Figuren 3 bis 8 auf die Ausgestaltung der Waschbürste 14 eingegangen.

Die Waschbürste 14 umfasst ein Trägerteil 30, das vorliegend als Trägerrohr 32 ausgestaltet ist und eine Achse definiert. Die Achse ist eine Schwenkachse 34. Das Trägerrohr 32 umfasst eine Wand 36 und einen von dieser eingefassten Innenraum 38.

"Axial" und "radial" sind vorliegend, sofern nicht näher erläutert, als auf die Schwenkachse 34 bezogen aufzufassen.

Positions- und Orientierungsangaben wie zum Beispiel "oben", "unten" oder dergleichen sind vorliegend auf einen bestimmungsgemäßen Gebrauch der Waschbürste 14 als Seitenwaschbürste bezogen aufzufassen, die in vertikaler Richtung oder geneigter Richtung hängend am Querträger 24 gehalten ist.

Die Waschbürste 14 ist axial in eine Mehrzahl von Bürstensegmenten 40 unterteilt. Vorliegend sind vier Bürstensegmente 40 vorhanden, deren Anzahl könnte jedoch auch unterschiedlich sein. Die Höhe jedes Bürstensegmentes 40 beträgt beispielsweise ungefähr 40 cm.

Die Bürstensegmente 40 sind vorliegend identisch ausgestaltet. Die Zeichnung zeigt in den Figuren 3 bis 8 nur ein Bürstensegment 40 ganz oder teilweise, dessen Aufbau nachfolgend erläutert wird.

Jedes Bürstensegment 40 umfasst einen Abschnitt des Trägerrohres 32, so dass die einzelnen Abschnitte des Trägerrohrs 32 dieses insgesamt ausbilden.

Jedes Bürstensegment 40 umfasst eine Schwenkeinrichtung 42 mit einem Drehkörper 44 und zwei Schwenkkörpern 46. Die Schwenkeinrichtung 42 bildet ein Gehäuse 48 mit einem Innenraum 50. Die Schwenkkörper 46, die axial voneinander beabstandet sind, bilden Deckwände des Gehäuses 48. Der Drehkörper 44 bildet eine Außenwand des Gehäuses 48. Die plattenartig ausgestalteten Schwenkkörper 46 sind axial auf einander gegenüberliegenden Seiten des Drehkörpers 44 positioniert. Das Trägerrohr 32 durchgreift das Gehäuse 48. Zu diesem Zweck sind in den Schwenkkörpern 46 Durchgangsöffnungen 52 gebildet.

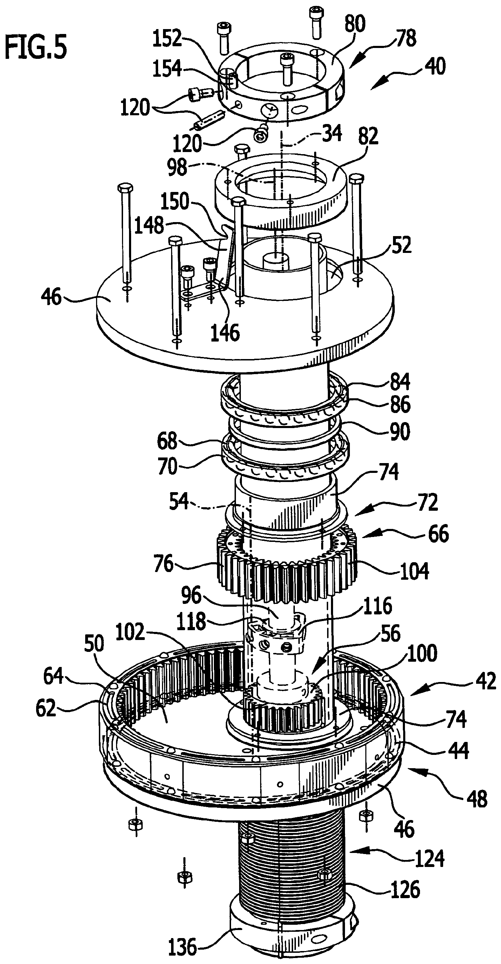

Die Schwenkkörper 46 sind miteinander verbunden, beispielweise durch in Figur 5 gezeigte Schrauben-Mutter-Paare oder vergleichbare Zuganker.

Der Drehkörper 44 ist vorliegend ringförmig ausgestaltet und definiert eine Drehachse 54 des Bürstensegmentes 40, um die der Drehkörper 44 wie nachfolgend erläutert mittels einer Antriebseinrichtung 56 drehend antreibbar ist. Die Drehachse 54 ist parallel zur Schwenkachse 34 ausgerichtet, so dass das Trägerrohr 32 exzentrisch bezüglich des Drehkörpers 44 positioniert ist. Umgekehrt ist der Drehkörper 44 exzentrisch bezüglich des Trägerrohrs 32 positioniert. Die Schwenkkörper 46 sind koaxial zum Drehkörper 44 ausgerichtet. Reinigungselemente 58, vorliegend in Gestalt von Borsten, sind direkt oder indirekt am Drehkörper 44 festgelegt. Bei der Waschbürste 14 ist zur Festlegung der Reinigungselemente 58 ein Haltekörper 60 vorgesehen, der radial außenseitig am Drehkörper 44 festgelegt und dadurch drehfest mit diesem verbunden ist. Der Haltekörper 60 weist eine trommelartige oder haspelartige Gestalt auf (ohne die ansonsten bei Trommeln oder Haspeln vorhandenen Seitenwangen), die auch als käfigartig bezeichnet werden kann. Die Reinigungselemente 58 sind radial außenseitig am Haltekörper 60 festgelegt und werden durch eine Rotation des Drehkörpers 44 in Rotation versetzt.

Vorliegend sind die Reinigungselemente 58 flexibel, so dass sie sich bei Kontakt mit dem Fahrzeug 12 umbiegen können, wobei der Grad der Umbiegung von der Auflagekraft am Fahrzeug 12 abhängt.

Die Bürstensegmente 40 sind so ausgestaltet, dass in axialer Richtung zwischen den Reinigungselementen 58 benachbarter Bürstensegmente 40 nur eine Lücke geringer Größe frei von Reinigungselementen 58 vorhanden ist (Figuren 1 und 2). Die Reinigungselemente 58 erstrecken sich in axialer Richtung dadurch im Wesentlichen über die gesamte axiale Länge der Bürstensegmente 40 insgesamt.

Der Drehkörper 44 ist über konzentrisch ausgerichtete Lagerelemente 62 an den Schwenkkörpern 46 drehbar gelagert und drehbeweglich zu diesen. Das Lagerelement 62 ist jeweils als insbesondere axialer Lagerring 64 ausgestaltet und vorliegend als Kugellager ausgebildet. Alternativ kann ein Gleitlager eingesetzt werden.

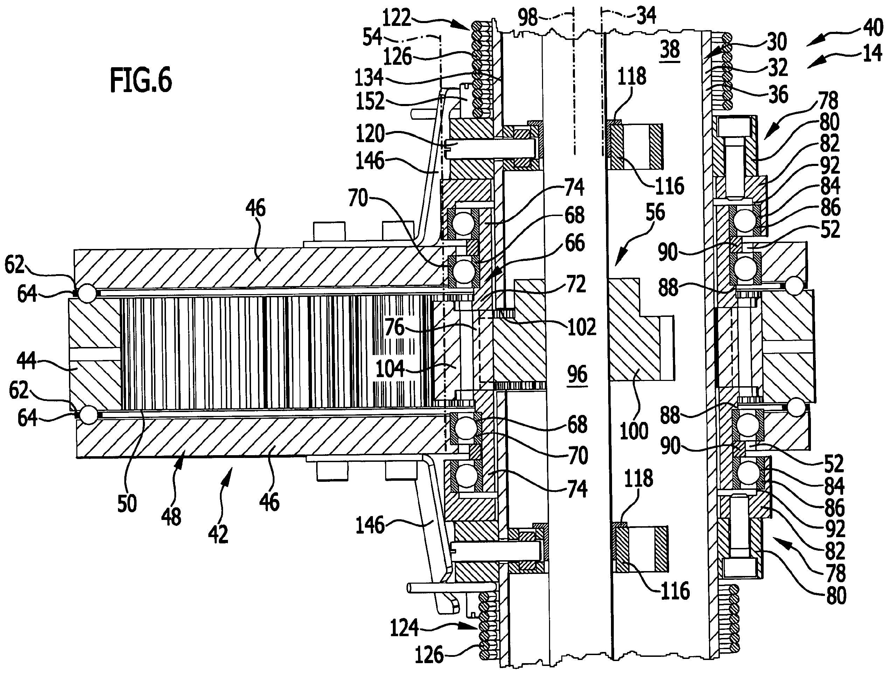

Die Schwenkeinrichtung 42 ist relativ zum Trägerrohr 32 um dessen Schwenkachse 34 schwenkbar. Zu diesem Zweck sind die Schwenkkörper 46 an einem Lagerkörper 66 schwenkbar gelagert, wobei ein jeweiliges Lagerelement 68 zur Lagerung eines jeweiligen Schwenkkörpers 46 am Lagerkörper 66 dient. Das Lagerelement 68 ist vorliegend ausgestaltet als Lagerring 70 und als Kugellager ausgebildet. Alternativ kann ein Gleitlager vorgesehen sein. Wie insbesondere aus Figur 6 hervorgeht, ist der Lagerring 70 radial zwischen dem Schwenkkörper 46 und dem Lagerkörper 66 positioniert.

Der Lagerkörper 66 ist vorliegend ausgestaltet als Lagerhülse 72, die das Trägerrohr 32 umgibt. Die Lagerhülse 72 ist koaxial zum Trägerrohr 32 ausgerichtet. Von Vorteil ist allerdings, wenn etwas Spiel zwischen der Lagerhülse 72 und dem Trägerrohr 32 vorhanden ist. Dies dient zum Beispiel der einfacheren Montage des Bürstensegmentes 40 und dem Ausgleich etwaiger Toleranzen bei der Fertigung.

Die Lagerhülse 72 ist vorliegend axial in drei Abschnitte unterteilt. Es sind zwei Hülsenabschnitte 74 vorgesehen, zwischen denen ein mittlerer Abschnitt 76 angeordnet ist. Die Hülsenabschnitte 74 liegen flanschartig am mittleren Abschnitt 76 an und sind mit diesem fest verbunden, vorliegend durch Verschraubung. Ein jeweiliger Hülsenabschnitt 74 ist einem Lagerring 70 zugeordnet, über den ein jeweiliger Schwenkkörper 46 an der Lagerhülse 72 gelagert ist.

In axialer Richtung erstreckt sich jeder Hülsenabschnitt 74 in vom mittleren Abschnitt 76 wegweisender Richtung über den Lagerring 70 und den Schwenkkörper 46 hinaus. Der mittlere Abschnitt 76 ist im Innenraum 50 des Gehäuses 48 angeordnet.

Das Bürstensegment 40 umfasst zur axialen Fixierung der Schwenkeinrichtung 42 zwei Haltekörper 78, die axial auf einander abgewandten Seiten des Gehäuses 48 und der Lagerhülse 72 angeordnet sind. Die Lagerhülse 72, und über diese die Schwenkeinrichtung 42, können sich in axialer Richtung indirekt an einem jeweiligen Haltekörper 78 abstützen und sind auf diese Weise gegen eine Bewegung in axialer Richtung gesichert.

Der Haltekörper 78 ist vorliegend mehrteilig ausgestaltet. Der Haltekörper 78 weist einen am Trägerrohr 32 festgelegten Haltering 80 auf, der zum Beispiel durch Verschraubung mit dem Trägerrohr 32 verbunden ist. Der Haltering 80 ist mit einem Fixierring 82 verbunden, beispielsweise durch Verschraubung. Der Fixierring 82 ist axial zwischen dem Haltering 80 und der Lagerhülse 72 positioniert.

Über ein Lagerelement 84 in Gestalt eines Lagerrings 86 ist der axial über den Schwenkkörper 46 und den Lagerring 70 überstehende Abschnitt des Hülsenabschnittes 74 am Haltekörper 78 drehbar gelagert. Der Lagerring 86 ist vorliegend als Kugellager ausgebildet. Alternativ kann ein Gleitlager vorgesehen sein. Der Lagerring 86 ist radial zwischen dem Hülsenabschnitt 74 und einem ihn überfangenden äußeren Abschnitt des Fixierrings 82 positioniert.

In axialer Richtung stützt sich eine jeweilige Schulter 88 der Lagerhülse 72 am Lagerring 70 ab, der seinerseits über einen Zwischenring 90 am Lagerring 86 anliegt und sich an diesem abstützt. Der Lagerring 86 stützt sich in axialer Richtung an einer Schulter 92 des Fixierringes 82 ab.

Die Antriebseinrichtung 56 dient vorliegend dazu, die Drehkörper 44 aller Bürstensegmente 40 anzutreiben. Die Antriebseinrichtung 56 umfasst einen Antriebsmotor 94. Der Antriebsmotor 94 ist in den Figuren 1 und 2 schematisch dargestellt und beispielsweise am Querträger 24 gehalten und im Bereich des Stellorgans 26 angeordnet. Der Antriebsmotor 94 ist derart ausgestaltet, dass die Drehkörper 44 wahlweise in eine der beiden Drehrichtungen um die Drehachse 54 angetrieben werden können.

Ferner umfasst die Antriebseinrichtung 56 eine Antriebswelle 96, die vom Antriebsmotor 94 angetrieben ist und eine Antriebsachse 98 definiert. Die Antriebswelle 96 ist im Trägerrohr 32 angeordnet und exzentrisch zu diesem ausgerichtet, wobei die Antriebsachse 98 und die Schwenkachse 34 parallel zueinander verlaufen.

Die Antriebswelle 96 ist im Trägerrohr 32 über Lagerbuchsen 116 drehbar gelagert. Jedem Bürstensegment 40 sind beispielsweise zwei Lagerbuchsen 116 zugeordnet (Figuren 5 und 6). Die Antriebswelle 96 durchgreift eine jeweilige Lagerbuchse 116, an der ein vorliegend als Gleitlager ausgestalteter Lagerring 118 angeordnet ist. Alternativ kann ein Kugellager vorgesehen sein.

Zur Festlegung der Lagerbuchse 116 kommen Fixierelemente 120 zum Einsatz, vorliegend ausgestaltet als Schrauben. Günstig ist es wenn die Fixierelemente 120 zugleich zur Fixierung des Halteringes 80 des Haltekörpers 78 am Trägerrohr 32 dienen.

Die schraubenförmigen Fixierelemente 120 durchgreifen den Haltering 80 und die Wand 36 von außen nach innen und stehen im Innenraum 38 mit der Lagerbuchse 116 in Eingriff (Figur 6). Gesonderte Fixierelemente für den Haltekörper 78 einerseits und die Lagerbuchse 116 andererseits können dadurch eingespart werden. Außerdem wird die Montage der Waschbürste 14 durch die Fixierung der Lagerbuchse 116 von außen vereinfacht.

Jedem Bürstensegment 40 zugeordnet weist die Antriebseinrichtung 56 ein Antriebsrad 100 auf, das drehfest an der Antriebswelle 96 gehalten ist. Das Antriebsrad 100 ist koaxial zur Antriebswelle 96 ausgerichtet und damit exzentrisch zur Schwenkachse 34. Das Antriebsrad 100 ist so bemessen, dass es eine jeweilige in der Wand 36 gebildete Durchgangsöffnung 102 abschnittsweise durchgreifen kann. Auf diese Weise kann ein jeweiliger Abschnitt des Antriebsrades 100 aus dem Innenraum 38 hinausragen und in radialer Richtung über die Wand 36 überstehen (Figuren 5 und 6).

Der Drehkörper 40 ist vorliegend als Hohlrad ausgestaltet, das mit der Antriebseinrichtung 56 und insbesondere dessen Antriebsrad 100 indirekt in Wirkverbindung steht. Vorliegend umfasst die Antriebseinrichtung 56 zu diesem Zweck ein Kopplungsrad 104, dessen Innenseite mit dem Antriebsrad 100 in Eingriff steht und dessen Außenseite mit dem Drehkörper 44 in Eingriff steht.

Das Kopplungsrad 104 wird vorliegend vom mittleren Abschnitt 76 und damit vom Lagerkörper 66 ausgebildet. Der Lagerkörper 66 übt auf diese Weise zusätzlich zur Lagerung der Schwenkkörper 46 mit der Übertragung der Antriebskraft vom Antriebsrad 100 auf den Drehkörper 44 eine weitere Funktion aus.

Im vorliegenden Fall weisen der Drehkörper 44 und das Antriebsrad 100 eine Verzahnung auf, und das Kopplungsrad 104 ist sowohl an der Innenseite als auch an der Außenseite mit einer Verzahnung versehen. Auf diese Weise kann die Antriebskraft zuverlässig von der Antriebswelle 96 auf den Drehkörper 44 übertragen werden.

Alternativ ist ein reibschlüssiger Eingriff zwischen dem Antriebsrad 100 und dem Kopplungsrad 104 und/oder zwischen dem Kopplungsrad 104 und dem Drehkörper 44 denkbar.

Bei einer andersartigen Ausgestaltung kann vorgesehen sein, dass der Schwenkeinrichtung 42 zwei Lagerkörper und insbesondere Lagerhülsen zugeordnet sind. Beispielsweise könnte das Kopplungsrad 104 anders als beschrieben nicht drehfest mit dem den Schwenkkörper 46 lagernden Abschnitt verbunden sein. Zu diesem Zweck ist zum Beispiel ein axiales Kugel- oder Gleitlager zwischen dem Kopplungsrad 104 und dem Schwenkkörper 46 denkbar.

Bei einer andersartigen vorteilhaften Ausgestaltung kann vorgesehen sein, dass der Schwenkkörper 46 nicht über den Lagerkörper 66 gelagert ist, sondern, vorteilhafterweise über ein Lagerelement, direkt am Trägerrohr 32. Auch in diesem Fall kann wie vorstehend erläutert ein Axiallager zwischen dem Kopplungsrad 104 und dem Schwenkkörper 46 vorgesehen sein.

Der Drehkörper 44 kann über die Schwenkeinrichtung 42 relativ zum Trägerrohr 32 um die Schwenkachse 34 verschwenkt werden. Dies kann auch als Verschwenken der Schwenkeinrichtung 42, deren Bestandteil der Drehkörper 44 ist, relativ zum Trägerrohr 32 um die Schwenkachse 34 angesehen werden. Aufgrund der drehbeweglichen Ausgestaltung des Drehkörpers 44 relativ zu den Schwenkkörpern 46 kann der Drehkörper 44 unabhängig von der Schwenkstellung über die Antriebseinrichtung 56 angetrieben werden.

Mittels der erfindungsgemäßen Waschbürste 14 kann eine konturabhängige Reinigung des Fahrzeuges 12 ausgeführt werden. Bei jedem Bürstensegment 40 kann die Schwenkeinrichtung 42, und damit der Besatz an Reinigungselementen 58, abhängig von der Fahrzeugkontur, aber unabhängig von den anderen Bürstensegmenten 40, um das Trägerrohr 32 verschwenken.

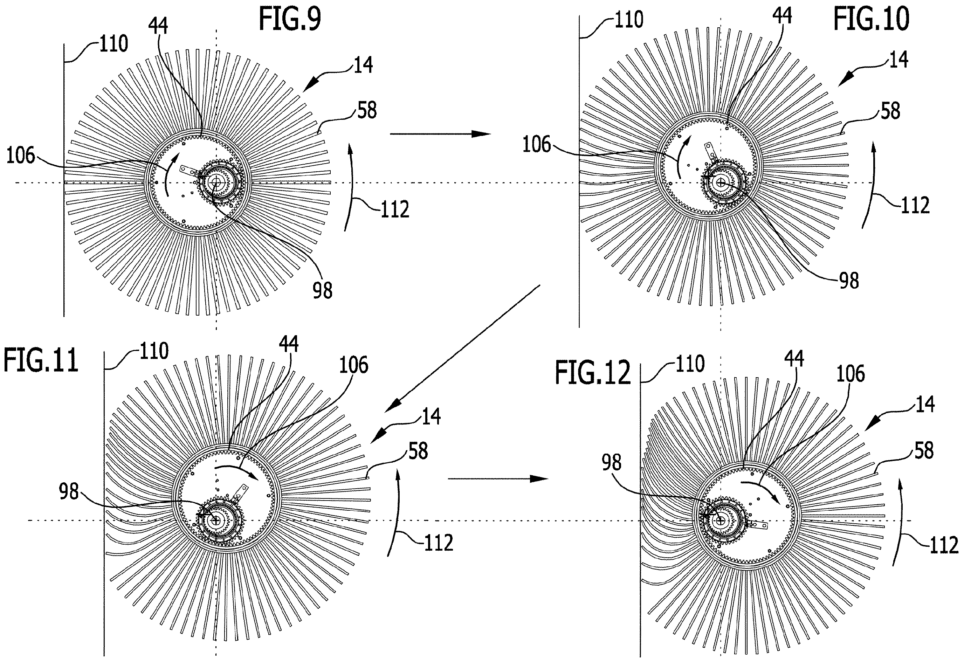

Dabei ist eine Verschwenkung um die Schwenkachse 34 in zwei einander entgegengesetzte Schwenkrichtungen 106 und 108 möglich (Figuren 9 bis 12 bzw. 13 bis 16). Der maximale Schwenkwinkel beträgt vorliegend jeweils ungefähr 180°. Da die Schwenkeinrichtungen 42 der unterschiedlichen Bürstensegmente 40 unabhängig voneinander relativ zum Trägerrohr 32 verschwenkt werden können, kann sich die Waschbürste 14 an die unterschiedlichen Konturen der Fahrzeuge 12 anpassen, wie dies in den Figuren 1 und 2 beispielhaft dargestellt ist und unter Verweis auf die Figuren 9 bis 16 erläutert wird.

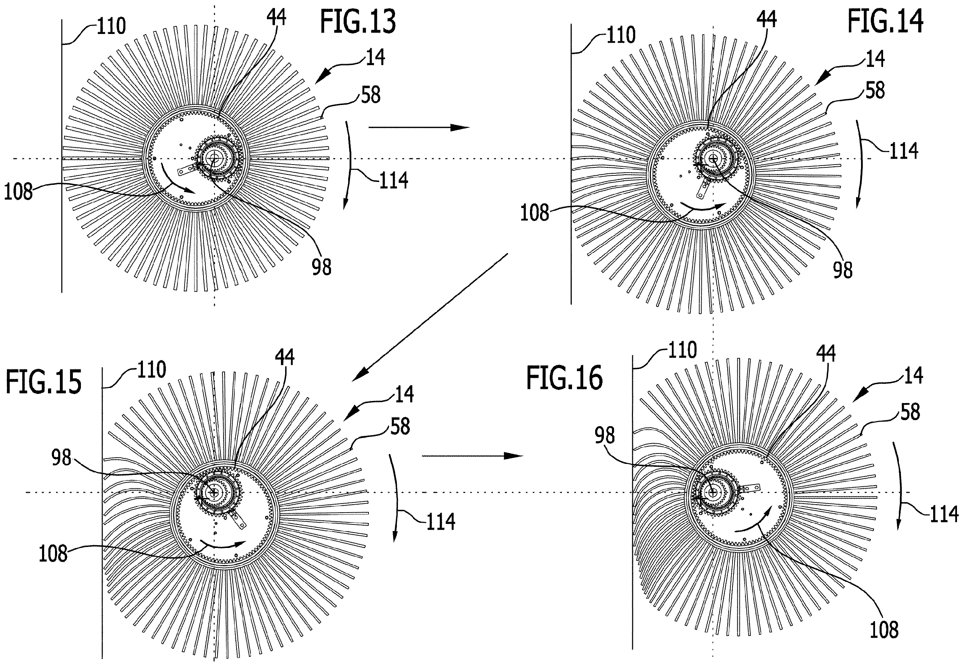

In den Figuren 9 bis 16 ist die Kontur des Fahrzeugs 12 durch eine vertikale Linie 110 symbolisiert. Während in dem Beispiel der Figuren 9 bis 12 der Drehkörper 44 in einer durch einen Pfeil 112 symbolisierten Drehrichtung angetrieben ist, ist der Drehkörper 44 im Beispiel der Figuren 13 bis 16 in einer durch den Pfeil 114 symbolisierten Drehrichtung angetrieben. Die Drehrichtungen 112, 114 sind einander entgegengesetzt.

Am Beispiel der Figuren 9 bis 12 ist schematisch ein unterschiedlicher Abstand der Waschbürste 14 zur durch die Linie 110 symbolisierten Kontur des Fahrzeuges 12 gezeigt. Nähert sich die Kontur des Fahrzeugs 12 der Waschbürste 14, d. h. der Abstand der Fahrzeugkontur relativ zum als ortsfest angesehenen Trägerrohr 32 verringert sich, wird über die Reinigungselemente 58 ein Drehmoment auf die Schwenkeinrichtung 42 ausgeübt. Das Drehmoment wird vom Drehkörper 44 aufgenommen. Der Drehkörper 44 wird infolge des Drehmomentes über die Schwenkeinrichtung 42 um die Schwenkachse 34 relativ zum Trägerrohr 32 verschwenkt. Die Verschwenkung erfolgt in der Schwenkrichtung 106, die der Drehrichtung 112 entgegengesetzt ist. Der Schwenkwinkel ist umso größer, je geringer der Abstand des Trägerrohrs 32 zur Fahrzeugkontur ist und steigt in den Darstellungen der Figuren 9 bis 12 sukzessive an.

Die Figuren 13 bis 16 zeigen den entsprechenden Fall, wobei der Drehkörper 44 in der entgegengesetzten Drehrichtung 114 angetrieben ist. Verringert sich der Abstand der Fahrzeugkontur zum als ortsfest angesehenen Trägerrohr 32, verschwenkt auch in diesem Fall der Drehkörper 44 über die Schwenkeinrichtung 42 relativ zum Trägerrohr 32. Die Verschenkung erfolgt in der Schwenkrichtung 108, die der Drehrichtung 114 entgegengesetzt ist.

Als besonders vorteilhaft bei der Waschbürste 14 erweist es sich, dass das Trägerrohr 32 unangetrieben ist. Die Antriebseinrichtung 56 wirkt nicht auf das Trägerrohr 32, sondern lediglich auf die darin gelagerte Antriebswelle 96. Die bewegte Masse der Waschbürste 14 kann dadurch gering gehalten werden. Insbesondere kann die Masse des Trägerrohrs 32 gering gehalten und dieses verhältnismäßig dünnwandig ausgestaltet werden. Über das Trägerrohr 32 sind nur Haltekräfte aufzubringen, jedoch kein Drehmoment zu übertragen. Dies bietet insbesondere die Möglichkeit, die Halterung der Bürstensegmente 40 am Trägerrohr 40 einerseits und die Antriebseinrichtung 56 zum Rotieren der Drehkörper 44 andererseits unabhängig voneinander zu optimieren.

Ein besseres Reinigungsergebnis kann auch dadurch erzielt werden, dass der Drehkörper 44 wahlweise in die Drehrichtung 112 oder die Drehrichtung 114 gedreht werden kann. Je nachdem, welche Kontur am Fahrzeug 12 zu reinigen ist, kann die Drehrichtung 112, 114 variiert werden. Dies gibt insbesondere die Möglichkeit, am Fahrzeug 12 bestehende Hinterschnitte besser abzureinigen, beispielsweise im Bereich der Außenspiegel. Änderungen der Drehrichtung 112, 114 können insbesondere auch beim Abreinigen der Fahrzeugfront und/oder des Fahrzeughecks vorgenommen werden.

Das Bürstensegment 40 umfasst eine erste Rückstelleinrichtung 122 und eine zweite Rückstelleinrichtung 124. Beide Rückstelleinrichtungen 122, 124 weisen ein jeweiliges Rückstellelement 126 auf.

Die Rückstelleinrichtungen 122, 124 sind in funktionaler Hinsicht gleich ausgestaltet. Allerdings sind die Rückstelleinrichtungen 122, 125 so konfiguriert, dass die Verschwenkung der Schwenkeinrichtung 42 in der Schwenkrichtung 106 entgegen der Wirkung der Rückstelleinrichtung 122 erfolgt. Die Verschwenkung der Schwenkeinrichtung 42 in der Schwenkrichtung 108 erfolgt entgegen der Wirkung der Rückstelleinrichtung 124. Die jeweils andere Rückstelleinrichtung 124 bzw. 122 übt bei der Verschwenkung in der Schwenkrichtung 106 bzw. 108 keine Wirkung auf die Schwenkeinrichtung 42 aus. Nachfolgend wird im Wesentlichen auf die Rückstelleinrichtung 122 eingegangen, wobei die entsprechenden Erläuterungen in korrespondierender Weise für die Rückstelleinrichtung 124 gelten.

Die Rückstelleinrichtungen 122, 124 sind axial auf einander abgewandten Seiten der Schwenkeinrichtung 42 angeordnet. Die Rückstelleinrichtung 122 ist oberhalb der Schwenkeinrichtung 42 positioniert und die Rückstelleinrichtung 124 unterhalb der Schwenkeinrichtung 42.

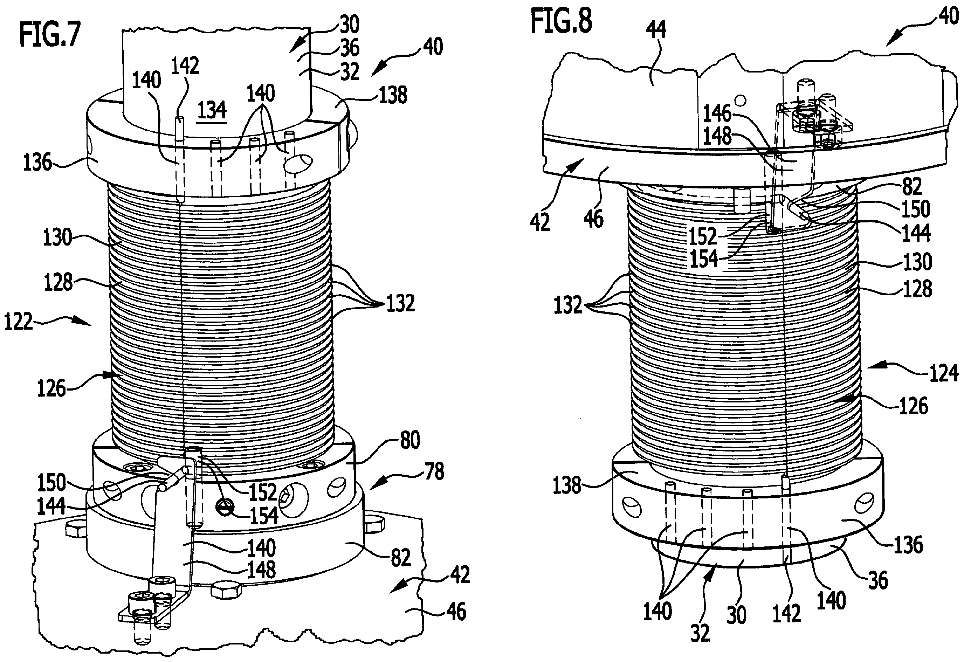

Wie insbesondere aus Figur 7 hervorgeht, ist das Rückstellelement 126 als elastisch verformbares Federelement 128 ausgestaltet. Das Federelement 128 ist eine Torsionsfeder 130, die als Schraubenfeder mit einer Vielzahl von Windungen 132 ausgestaltet ist. Die Torsionsfeder 130 umgibt das Trägerrohr 32. Das Trägerrohr 32 dient auf diese Weise als Kern 134 zur Aufnahme der Torsionsfeder 130. Die Torsionsfeder 130 ist dadurch zuverlässig in Position am Trägerrohr 32 gehalten und gegen Kippmomente gesichert, die beim Verformen der Torsionsfeder 130 auftreten können.

In radialer Richtung ist etwas Spiel zwischen den Windungen 132 und der Wand 36 vorhanden, um eine Verformung der Torsionsfeder 130 beim Schwenken der Schwenkeinrichtung 42 zuzulassen.

Die Torsionsfeder 130 ist unabhängig von der Stellung der Schwenkeinrichtung 42 innerhalb der Kontur des Drehkörpers 44 positioniert und ragt insbesondere nicht in radialer Richtung über diese Kontur hinaus. Dies stellt sicher, dass die Torsionsfeder 130 nicht in Kontakt mit Fahrzeugflächen kommen und diese beschädigen kann.

In axialer Richtung ist die Torsionsfeder 130 zwischen dem sie abstützenden Haltekörper 78 (über den Haltering 80) und einem Halteelement 136 positioniert, an dem sich die Torsionsfeder 130 ebenfalls in axialer Richtung abstützen kann. Das Halteelement 136 ist ortsfest relativ zum Trägerrohr 32 und von der Antriebseinrichtung 56 ebenfalls unangetrieben. Insbesondere ist das Halteelement 136 bei der Waschbürste 14 am Trägerrohr 32 fixiert. Vorliegend ist das Halteelement 136 als das Trägerrohr 32 umgebender Klemmring 138 ausgestaltet.

Im Halteelement 136 ist mindestens eine Aufnahme 140 für einen Endabschnitt 142 der Torsionsfeder 130 gebildet. Die Aufnahme 140 ist als Durchgangsöffnung ausgestaltet. Vorzugsweise sind eine Mehrzahl von in Umfangsrichtung des Trägerrohres 32 angeordneten Aufnahmen 140 vorhanden.

Der Endabschnitt 142 kann in die Aufnahme 140 eingreifen, so dass das Halteelement 136 einen ortsfesten Angriffspunkt für die Torsionsfeder 130 bildet.

Ein dem Endabschnitt 142 gegenüberliegender Endabschnitt 144 greift an einem Anschlagelement 146 an, das an dem der Torsionsfeder 130 zugewandten Schwenkkörper 46 festgelegt ist. Das Anschlagelement 146 bildet einen beweglichen Angriffspunkt für die Torsionsfeder 130. Der Endabschnitt 144 ist beispielsweise radial zu den Windungen 132 abgewinkelt.

Das Anschlagelement 146 ist durch einen Anschlagwinkel 148 ausgebildet, der beispielsweise durch Verschraubung am Schwenkkörper 46 gehalten ist. Am Anschlagwinkel 148 ist eine Ausnehmung 150 zur Aufnahme des Endabschnittes 144 gebildet. Die Ausnehmung 150 ist zu einer Seite hin geöffnet, so dass der Endabschnitt 144 aus der Ausnehmung 150 austreten und wieder in diese eingeführt werden kann.

Die Rückstelleinrichtung 122 umfasst ferner ein Anschlagelement 152, das ebenfalls ortsfest zum Trägerrohr 32 angeordnet ist. Vorliegend ist das Anschlagelement 152 ein Anschlagstift 154, der am Haltekörper 78 und insbesondere dessen Haltering 80 angeordnet ist. Der Anschlagstift 154 ist zum Beispiel in den Haltering 80 eingeschraubt.

Die Torsionsfeder 130 ist so ausgestaltet, dass sie bei Fixierung am Halteelement 136 und Anliegen am Anschlagelement 152 unter Vorspannung steht. Beispielsweise ist die Torsionsfeder 130 um mindestens eine Windung 132 und insbesondere mehrere Windungen 132 vorgespannt.

Die Schwenkeinrichtung 42 kann relativ zum Trägerrohr 32 die in den Figuren 9 und 13 gezeigte Grundstellung einnehmen. In der Grundstellung schlagen die Endabschnitte 144 beider Torsionsfedern 130 an dem jeweiligen Anschlagelement 152 an und greifen in die Ausnehmungen 150 des jeweiligen Anschlagwinkels 148 ein.

Die Anschlagelemente 152 sind so positioniert, dass sie in Umfangsrichtung des Trägerrohrs 32 geringfügig voneinander beabstandet sind, so besteht längs den Schwenkrichtungen 106, 108 ein geringerer Winkelabstand zwischen den Anschlagelementen 152. Nimmt die Schwenkeinrichtung 42 die Grundstellung ein, übt daher keine der Torsionsfedern 130 auf die Schwenkeinrichtung 42 eine Federkraft und damit ein Drehmoment aus.

Wirkt auf den Drehkörper 44 und damit auf die Schwenkeinrichtung 42 ein von den Reinigungselementen 58 vermitteltes Drehmoment, kann eine Verschwenkung der Schwenkeinrichtung 42 ausgehend von der Grundstellung in der Schwenkrichtung 106 erfolgen (Figur 9 bis 12). Die Verschwenkung erfolgt entgegen der Wirkung und der Vorspannung der Torsionsfeder 130 der Rückstelleinrichtung 122. Durch die Vorspannung ist sichergestellt, dass bereits bei beginnender Verschwenkung eine Rückstellkraft auf die Schwenkeinrichtung 42 ausgeübt wird, wodurch die Grundstellung der Schwenkeinrichtung 42 auf noch bessere Weise definiert wird.

Beim Verschwenken in der Schwenkrichtung 106 übt die Torsionsfeder 130 der Rückstelleinrichtung 124 indessen kein Drehmoment auf die Schwenkeinrichtung 42 aus, weil die Torsionsfeder 130 am Anschlagelement 152 der Rückstelleinrichtung 124 anliegt, wodurch die Torsionsfeder 130 auch nicht auf Zug belastet wird.

Das die Schwenkeinrichtung 42 insgesamt verschwenkt wird, verschwenkt auch der Anschlagwinkel 148 der Rückstelleinrichtung 124, wobei der Endabschnitt 144 aus der der Ausnehmung 150 austritt. Umgekehrt wird der Endabschnitt 144 bei einer Rückverschwenkung wieder in die Ausnehmung 150 geführt.

Entfällt das über die Reinigungselemente 58 vermittelte Drehmoment, wird über die Rückstellkraft der Torsionsfeder 130 ein Drehmoment auf die Schwenkeinrichtung 42 ausgeübt und diese wieder in die Grundstellung verschwenkt.

In entsprechender Weise ist die Möglichkeit gegeben, die Schwenkeinrichtung 42 in der Schwenkrichtung 108 entgegen der Wirkung und Vorspannkraft der Torsionsfeder 130 der Rückstelleinrichtung 124 zu verschwenken (Figuren 13 bis 16). Die Torsionsfeder 130 der Rückstelleinrichtung 122 liegt an deren Anschlagelement 152 an. Sie übt kein Drehmoment auf die Schwenkeinrichtung 42 aus und wird auch nicht auf Zug belastet. Der Anschlagwinkel 148 der Rückstelleinrichtung 122 kann mit verschwenkt werden. Das Rückverschwenken in die Grundstellung erfolgt dadurch, dass über die Rückstellkraft der Torsionsfeder 130 der Rückstelleinrichtung 124 ein Drehmoment auf die Schwenkeinrichtung 42 ausgeübt wird.

Die Drehmomente, die von den Torsionsfedern 130 auf die Schwenkeinrichtung 42 ausübbar sind, sind einander entgegengesetzt. Vorliegend wird bei Verschwenken aus der Grundstellung nur über je eine Torsionsfeder 130 ein Drehmoment auf die Schwenkeinrichtung ausgeübt.

Das Vorsehen der Torsionsfedern 130 mit einer Vielzahl von Windungen 132 und der bestehenden Vorspannung erweist sich in der Praxis als besonders vorteilhaft für eine zuverlässige Funktion der Waschbürste 14. Die Federelemente 128 weisen eine im Wesentlichen lineare Kennlinie auf. Die Verschwenkung der Schwenkeinrichtung 42 in beide Schwenkrichtungen 106 und 108 erfolgt bei sich der Waschbürste 14 nähernder Fahrzeugkontur gleichmäßig und nicht abrupt. Auf diese Weise ist sichergestellt, dass die Reinigungselemente 58 jederzeit ausreichenden, aber nicht übermäßigen Kontakt mit dem Fahrzeug 12 haben. Dadurch kann insgesamt ein besseres Reinigungsergebnis erzielt werden.

Die Schwenkkörper 46 dienen als Mitnehmer für den Drehkörper 44, wenn sie unter der Rückstellkraft der jeweiligen Torsionsfeder 130 zur Einnahme der Grundstellung durch die Schwenkeinrichtung 42 verschwenkt werden. Umgekehrt wirkt der Drehkörper 44 als Mitnehmer für die Schwenkkörper 46 infolge des über die Reinigungselemente 58 vermittelten Drehmomentes.

Die Möglichkeit, die Vorspannung der Torsionsfeder 130 zu verändern, weist mehrere Vorteile auf. Je nachdem, in welche Aufnahme 140 der Endabschnitt 142 eingreift, ändert sich die Rückstellkraft der Torsionsfeder 130. Damit lässt sich einstellen, bei welcher Kraft auf den Drehkörper 44 über die Reinigungselemente 58 die Schwenkbewegung einsetzt. Umgekehrt kann die Auflagekraft der Reinigungselemente 58 auf das Fahrzeug 12 und/oder der Schwenkwinkel eingestellt werden, um die Intensität der Abreinigung des Fahrzeugs 12 zu beeinflussen.

Bei Einsatz unterschiedlicher Reinigungselemente 58, die sich in ihren spezifischen Reibwerten voneinander unterscheiden, kann über die Vorspannung der Torsionsfeder 130 eine identische oder vergleichbare Auflagekraft erzielt werden.

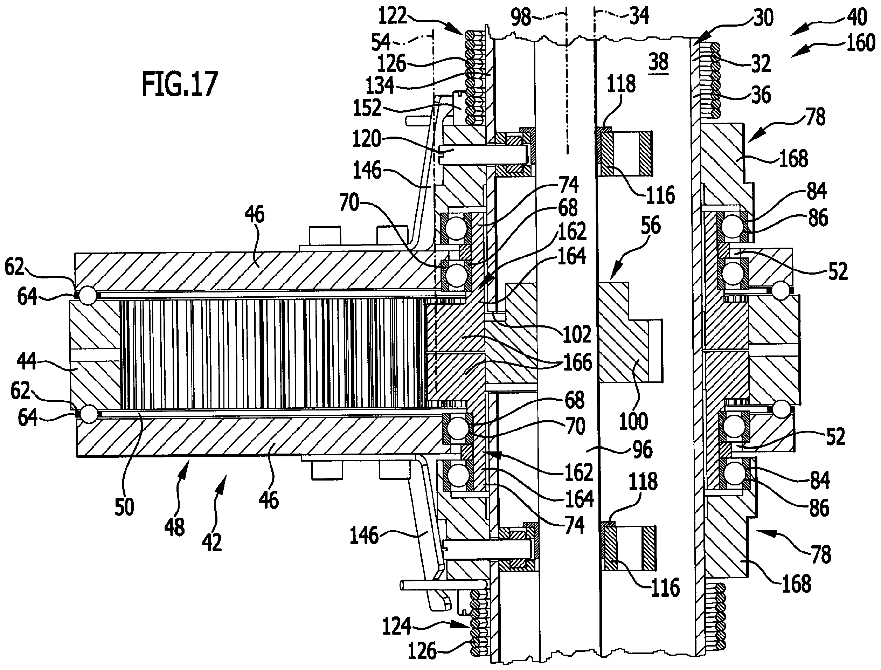

Nachfolgend wird unter Verweis auf die Figuren 17 bis 20 auf weitere vorteilhafte Ausführungsformen der erfindungsgemäßen Fahrzeugbehandlungsbürste eingegangen. Alle Fahrzeugbehandlungsbürsten sind ausgestaltet als Fahrzeugwaschbürsten, die nachfolgend vereinfacht als Waschbürsten bezeichnet werden und bei der Waschanlage 10 zum Einsatz kommen können.

Für gleiche oder gleichwirkende Merkmale und Bauteile werden identische Bezugszeichen benutzt. Die im Zusammenhang mit der Erläuterung der Waschbürste 14 erwähnten Vorteile können bei den nachfolgend erläuterten Waschbürsten ebenfalls erzielt werden. Zur Vermeidung von Wiederholungen kann auf die voranstehenden Ausführungen verwiesen werden. Es wird im Wesentlichen auf die Unterschiede eingegangen.

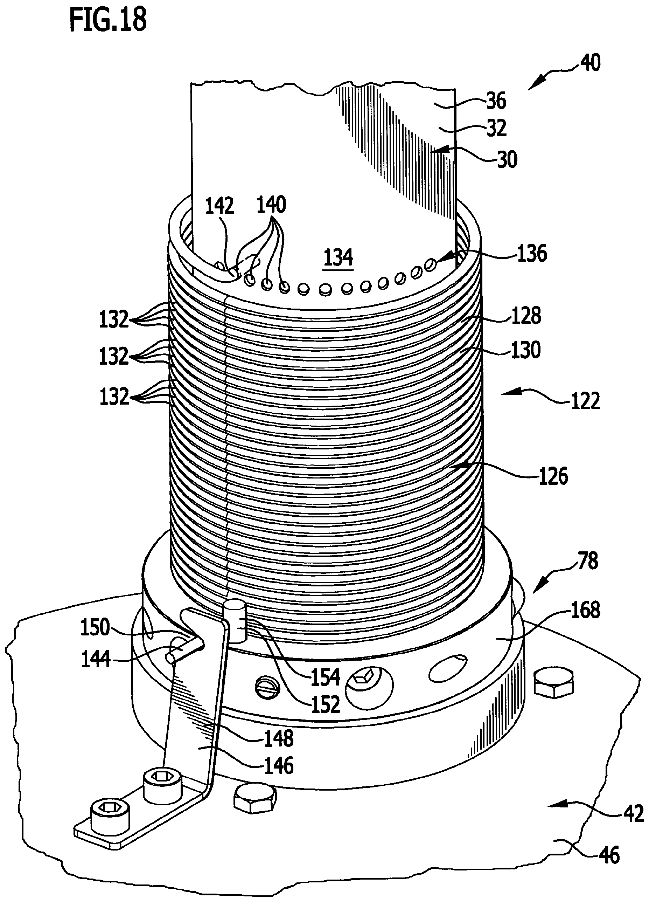

Die Figuren 17 und 18 zeigen teilweise ein Bürstensegment 40 einer mit dem Bezugszeichen 160 belegten Waschbürste. Figur 18 zeigt die Rückstelleinrichtung 122 in einer der Figur 7 entsprechenden Weise. Die nachfolgenden Ausführungen gelten für die Rückstelleinrichtung 124 entsprechend.

Bei der Waschbürste 160 sind anstelle des Lagerkörpers 66 zwei Lagerkörper 162 vorgesehen, jeweils ausgestaltet als Lagerhülse 164. Statt der Dreiteilung der Lagerhülse 72 mit den Hülsenabschnitten 74 und dem Kopplungsrad 104 besteht eine Zweiteilung mit zwei Lagerhülsen 164, die jeweils einen Hülsenabschnitt 74 und ein vorzugsweise einstückig mit diesem verbundenes Kopplungsrad 166 aufweisen. Die Kopplungsräder 166 sind ansonsten ausgestaltet wie das Kopplungsrad 104 und zusammen mit einer axialen Erstreckung versehen, die der axialen Erstreckung des Kopplungsrades 104 entspricht. Die Lagerhülsen 164 können miteinander verbunden sein oder voneinander getrennt sein. Das Antriebsrad 100 steht mit beiden Kopplungsrädern 166 in Eingriff, und jedes Kopplungsrad 166 steht mit dem Drehkörper 44 in Eingriff.

Der Haltekörper 78 weist einen einstückigen Haltering 168 auf, der in Form und Funktion dem Haltering 80 zusammen mit dem Fixierring 82 bei der Waschbürste 14 entspricht.

Das Halteelement 136 der Rückstelleinrichtungen 122 und 124 wird bei der Waschbürste 160 durch das Trägerrohr 32 selbst gebildet. Die Aufnahmen 140 sind Durchbrechungen der Wand 36. Der Endabschnitt 142 der Torsionsfeder 130 greift radial in eine der Durchgangsöffnungen ein. Ein gesondertes Halteelement kann eingespart werden.

Das Anschlagelement 152 ist bei der Waschbürste 160 einstückig mit dem Haltering 168 gebildet und beispielsweise an diesen angeformt.

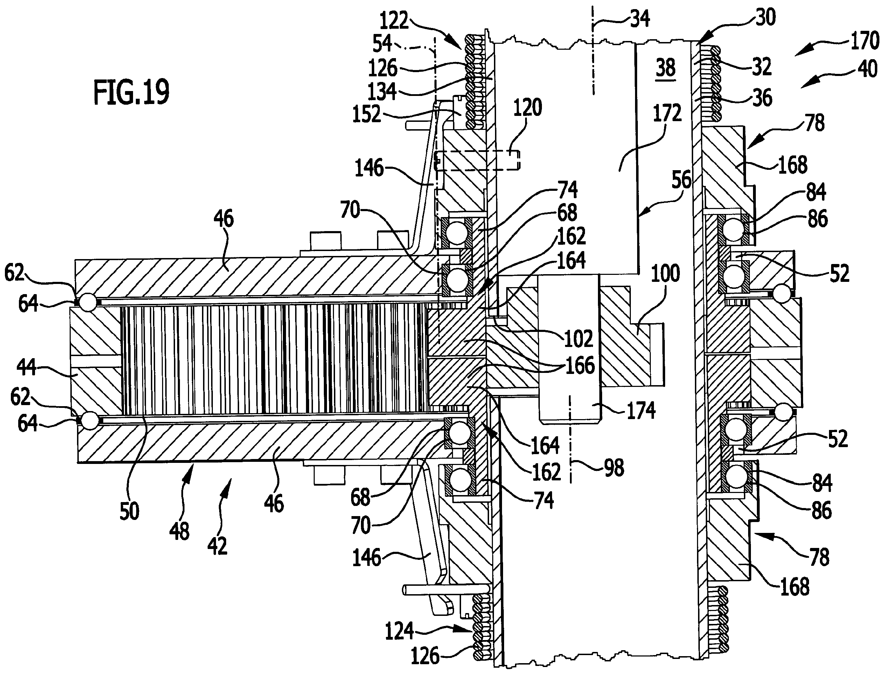

Figur 19 zeigt eine Teildarstellung eines Bürstensegments 40 einer mit dem Bezugszeichen 170 belegten Waschbürste.

Bei der Waschbürste 170 weist die Antriebseinrichtung 56 eine Mehrzahl von Antriebsmotoren 172 auf. Über den Antriebsmotor 172 wird eine Antriebswelle 174 exzentrisch zur Schwenkachse 34 angetrieben. An die Antriebswelle 174 ist das Antriebsrad 110 drehfest gehalten. Durch den Einsatz unterschiedlicher Antriebsmotoren 172 können der Antriebsmotor 94, die Antriebswelle 96 und die Lagerbuchsen 116 entfallen.

Jedem Bürstensegment 40 und deren Drehkörper 44 ist ein Antriebsmotor 172 zugeordnet. Dies erlaubt es, die Drehkörper 44 individuell anzutreiben, insbesondere mit unterschiedlichen Drehzahlen und/oder in unterschiedlichen Drehrichtungen. Dadurch ist beispielsweise die Möglichkeit gegeben, die Reinigung des Fahrzeuges 12 an einem bestimmten Fahrzeugbereich mittels des den Fahrzeugbereich kontaktierenden Bürstensegmentes 40 zu optimieren.

Beispielsweise ist vorgesehen, dass untere Fahrzeugbereiche unter Rotation des Drehkörpers 44 mit höherer Geschwindigkeit und höherer Intensität abgereinigt werden, weil diese Fahrzeugbereiche üblicherweise stärker verschmutzt sind. Fahrzeugbereiche oben am Fahrzeug, zum Beispiel nahe dem Dach, können zum Beispiel mit geringerer Drehzahl des Drehkörpers 44 und verminderter Reinigungsintensität abgereinigt werden.

Der Antriebsmotor 172 ist bei der Waschbürste 170 im Innenraum 38 angeordnet. Vorzugsweise ist der Antriebsmotor 172 über von außen durch die Wand 36 hindurchgeführte Fixierelemente fixiert. Dabei werden bevorzugt die Fixierelemente 120 eingesetzt, die auch den Haltekörper 78 am Trägerrohr 32 fixieren.

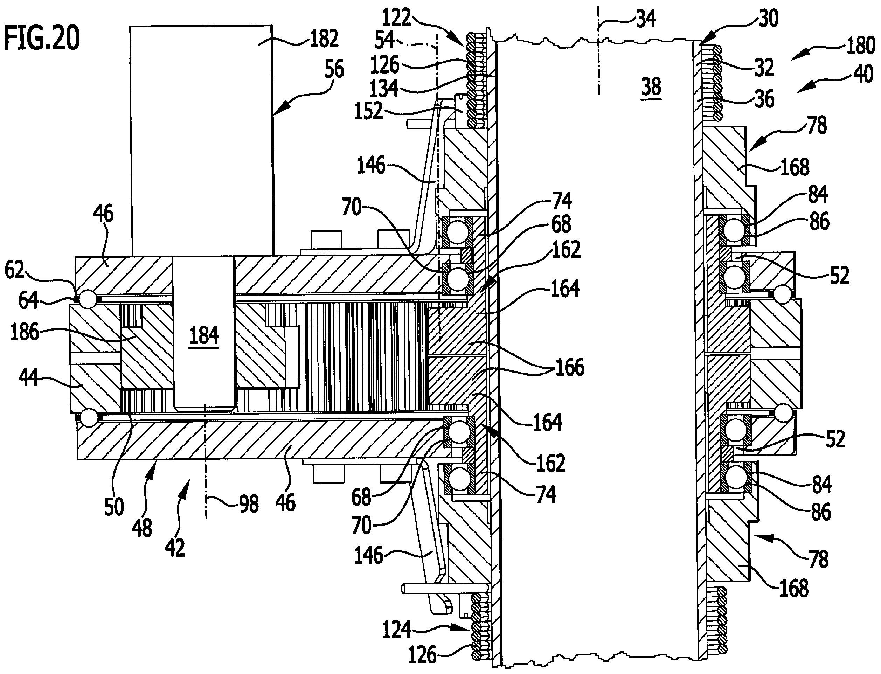

Figur 20 zeigt eine Teildarstellung eines Bürstensegments 40 einer mit dem Bezugszeichen 180 belegten Waschbürste.

Auch bei der Waschbürste 180 sind Antriebsmotoren 182 vorgesehen, wobei jedem Bürstensegment 40 ein Antriebsmotor 182 zugeordnet ist. Der Antriebsmotor 94, die Antriebswelle 96 und die Lagerbuchsen 116 können entfallen.

Die Antriebsmotoren 182 sind bei der Waschbürste 180 am jeweiligen Gehäuse 48 festgelegt. Beispielsweise ist der Antriebsmotor 182 mit einem Schwenkkörper 46 durch eine in der Zeichnung nicht dargestellte Verschraubung verbunden. Vorteilhafterweise liegt der Antriebsmotor 182 obenseitig auf dem Gehäuse 48 auf.

Eine Antriebswelle 184 greift in den Innenraum 50 ein. Die Antriebswelle 184 ist parallel zur Drehachse 54 ausgerichtet. An der Antriebswelle 184 ist ein Antriebsrad 186 im Innenraum 50 drehfest gehalten. Das Antriebsrad 186 steht mit der Innenseite des Drehkörpers 44 in Eingriff. Vorteilhafterweise ist eine Verzahnung zwischen dem Antriebsrad 186 und dem Drehkörper 44 vorgesehen.

Bei der Waschbürste 160 kommt anstelle des Kopplungsrades 104 oder der Kopplungsräder 166 ein Führungsrad 188 zum Einsatz. Die Außenseite des Führungsrades 188 steht mit dem Drehkörper 44 in Eingriff, beispielsweise über eine Verzahnung. Da das Antriebsrad 100 entfällt, ist ein innenseitiger Eingriff am Führungsrad 188 nicht erforderlich. Die Durchgangsöffnung 102 in der Wand 36 kann entfallen.

Durch die separaten Antriebsmotoren 182 bei der Waschbürste 180 können die bereits im Zusammenhang mit der Waschbürste 170 erwähnten zusätzlichen Vorteile ebenfalls erzielt werden, die sich durch den individuellen Antrieb jedes Drehkörpers 44 ergeben.

Es versteht sich, dass die verschiedenen Varianten für den Lagerkörper 66 bzw. die Lagerkörper 162 bei allen hier beschriebenen Ausführungsformen der Waschbürste wahlweise zum Einsatz kommen können. Entsprechendes gilt für die verschiedenen Varianten des Haltekörpers 78 mit getrenntem Haltering 80 und Fixierring 82 oder dem Haltering 168. Weiter gilt entsprechendes für das Halteelement 136 der Rückstelleinrichtungen 122, 124 als Klemmring 138 oder ausgebildet durch das Trägerrohr 32.

### Bezugszeichenliste:

- 10: Portalwaschanlage
- 12: Fahrzeug
- 14: Fahrzeugwaschbürste
- 16: Seitenbürste
- 18: seitliche Fahrzeugfläche
- 20: Aufstellfläche
- 22: Vertikalträger
- 24: Querträger
- 26: Stellorgan
- 28: Querrichtung (Pfeil)
- 30: Trägerteil
- 32: Trägerrohr
- 34: Schwenkachse
- 36: Wand
- 38: Innenraum
- 40: Bürstensegment
- 42: Schwenkeinrichtung
- 44: Drehkörper
- 46: Schwenkkörper
- 48: Gehäuse
- 50: Innenraum
- 52: Durchgangsöffnung
- 54: Drehachse
- 56: Antriebseinrichtung
- 58: Reinigungselement
- 60: Haltekörper
- 62: Lagerelement
- 64: Lagerring
- 66: Lagerkörper
- 68: Lagerelement
- 70: Lagerring
- 72: Lagerhülse
- 74: Hülsenabschnitt
- 76: mittlerer Abschnitt
- 78: Haltekörper
- 80: Haltering
- 82: Fixierring
- 84: Lagerelement
- 86: Lagerring
- 88: Schulter
- 90: Zwischenring
- 92: Schulter
- 94: Antriebsmotor
- 96: Antriebswelle
- 98: Antriebsachse
- 100: Antriebsrad
- 102: Durchgangsöffnung
- 104: Kopplungsrad
- 106: Schwenkrichtung (Pfeil)
- 108: Schwenkrichtung (Pfeil)
- 110: Linie (Kontur)
- 112: Drehrichtung (Pfeil)
- 114: Drehrichtung (Pfeil)
- 116: Lagerbuchse
- 118: Lagerring
- 120: Fixierelement
- 122: Rückstelleinrichtung
- 124: Rückstelleinrichtung
- 126: Rückstellelement
- 128: Federelement
- 130: Torsionsfeder
- 132: Windung
- 134: Kern
- 136: Halteelement
- 138: Klemmring
- 140: Aufnahme
- 142: Endabschnitt
- 144: Endabschnitt
- 146: Anschlagelement
- 148: Anschlagwinkel
- 150: Ausnehmung
- 152: Anschlagelement
- 154: Anschlagstift
- 160: Waschbürste
- 162: Lagerkörper
- 164: Lagerhülse
- 166: Kopplungsrad
- 168: Haltering
- 170: Waschbürste
- 172: Antriebsmotor
- 174: Antriebswelle
- 180: Waschbürste
- 182: Antriebsmotor
- 184: Antriebswelle
- 186: Antriebsrad
- 188: Führungsrad

## Patentansprüche

1. Fahrzeugbehandlungsbürste für Wasch- und/oder Polierzwecke in einer Fahrzeugbehandlungsanlage, umfassend ein eine Längserstreckung aufweisendes und eine Schwenkachse (34) definierendes Trägerteil (30), eine Mehrzahl von axial nebeneinander angeordneten und jeweils Reinigungselemente (58) umfassenden Bürstensegmenten (40) und eine Antriebseinrichtung (56), **dadurch gekennzeichnet, dass** mindestens ein Bürstensegment (40) eine Schwenkeinrichtung (42) mit einem Drehkörper (44) umfasst, an dem die Reinigungselemente (58) des Bürstensegmentes (40) indirekt oder direkt gehalten sind und der mit der Antriebseinrichtung (56) in Wirkverbindung steht zum Antreiben des Drehkörpers (44) um eine von der Schwenkachse (34) unterschiedliche Drehachse (54) des Bürstensegmentes (40), wobei der Drehkörper (44) über die Schwenkeinrichtung (42) relativ zum Trägerteil (30) um die Schwenkachse (34) verschwenkbar ist, wobei das Bürstensegment (40) mindestens eine Rückstelleinrichtung (122, 124) mit einem Rückstellelement (126) umfasst, entgegen dessen Wirkung die Schwenkeinrichtung (42) relativ zum Trägerteil (30) in einer Schwenkrichtung (106, 108) verschwenkbar ist, wobei das Rückstellelement eine Torsionsfeder (130) umfasst oder bildet, die mit der Schwenkeinrichtung (42) einerseits und einem ortsfesten Halteelement (136) anderseits koppelt zum Verschwenken der Schwenkeinrichtung (42) und des Halteelementes (136) relativ zueinander.

2. Fahrzeugbehandlungsbürste nach Anspruch 1, **dadurch gekennzeichnet, dass** zumindest eines der Folgenden gilt:
- die Torsionsfeder (130) ist als Schraubenfeder ausgestaltet;
- ein Kern (134) ist vorgesehen, den die Torsionsfeder (130) umgibt, wobei insbesondere das Trägerteil (30) den Kern (134) umfasst oder ausbildet;
- die Torsionsfeder (130) ist koaxial zum Trägerteil (30) ausgerichtet.

3. Fahrzeugbehandlungsbürste nach einem der voranstehenden Ansprüche, **dadurch gekennzeichnet, dass** das Trägerteil (30) das Halteelement (136) ausbildet oder dass das Halteelement (136) am Trägerteil (30) festgelegt ist und/oder dass die Torsionsfeder (130) unabhängig von der Position der Schwenkeinrichtung (42) relativ zum Trägerteil (30) innerhalb einer Kontur des Drehkörpers (44) angeordnet ist.

4. Fahrzeugbehandlungsbürste nach einem der voranstehenden Ansprüche, **dadurch gekennzeichnet, dass** die Schwenkeinrichtung (42) relativ zum Trägerteil (30) ausgehend von einer Grundstellung entgegen einer Vorspannung der Torsionsfeder (130) in der Schwenkrichtung (106, 108) verschwenkbar ist, vorzugsweise dass die Vorspannung der Torsionsfeder (130) veränderbar ist.

5. Fahrzeugbehandlungsbürste nach Anspruch 4, **dadurch gekennzeichnet, dass** das Halteelement (136) eine Mehrzahl von Aufnahmen (140) umfasst oder bildet, in die die Torsionsfeder (130) wahlweise eingreifen kann und dadurch in unterschiedliche Spannzustände bringbar ist.

6. Fahrzeugbehandlungsbürste nach einem der voranstehenden Ansprüche, **dadurch gekennzeichnet, dass** der Drehkörper (44) über die Schwenkeinrichtung (42) in zwei einander entgegengesetzte Schwenkrichtungen (106, 108) verschwenkbar ist.

7. Fahrzeugbehandlungsbürste nach einem der voranstehenden Ansprüche, **dadurch gekennzeichnet, dass** die Rückstelleinrichtung (122, 124) ein Anschlagelement (152) für die Torsionsfeder (130) umfasst, an dem diese bei Einnahme einer Grundstellung durch die Schwenkeinrichtung (42) derart anschlägt, dass in der Grundstellung keine Federkraft über die Torsionsfeder (130) auf die Schwenkeinrichtung (42) ausgeübt wird, und dass die Schwenkeinrichtung (42) ausgehend von der Grundstellung in die entgegengesetzte Schwenkrichtung (106, 108) verschwenkbar ist.

8. Fahrzeugbehandlungsbürste nach einem der voranstehenden Ansprüche, **dadurch gekennzeichnet, dass** das Bürstensegment (40) zwei Rückstelleinrichtungen (122, 124) umfasst, wobei der Drehkörper (44) über die Schwenkeinrichtung (42) relativ zum Trägerteil (30) in zwei einander entgegengesetzte Schwenkrichtungen (106, 108) verschwenkbar ist, entgegen der Wirkung eines jeweiligen Rückstellelementes (126) einer Rückstelleinrichtung (122, 124).

9. Fahrzeugbehandlungsbürste nach Anspruch 8, **dadurch gekennzeichnet, dass** die Rückstelleinrichtungen (122, 124) axial auf einander gegenüberliegenden Seiten der Schwenkeinrichtung (42) angeordnet sind und/oder dass beide Rückstellelemente (126) als Torsionsfedern (130) ausgestaltet sind, die mit der Schwenkeinrichtung (42) einerseits und einem jeweiligen ortsfesten Halteelement (136) anderseits koppeln.

10. Fahrzeugbehandlungsbürste nach Anspruch 9, **dadurch gekennzeichnet, dass** zumindest eines der Folgenden gilt:
- die von den Torsionsfedern (130) auf die Schwenkeinrichtung (42) ausübbaren Drehmomente sind einander entgegengerichtet;
- die Torsionsfedern (130) schlagen bei Einnahme der Grundstellung durch die Schwenkeinrichtung (42) an jeweiligen Anschlagelementen (152) an;
- die Schwenkeinrichtung (42) ist in der Grundstellung frei von über die Torsionsfedern (130) ausübbaren Rückstellkräften bzw. Drehmomenten.

11. Fahrzeugbehandlungsbürste nach einem der voranstehenden Ansprüche, **dadurch gekennzeichnet, dass** zumindest eines der Folgenden gilt:
- zwei oder mehr Bürstensegmente (40) umfassen eine Schwenkeinrichtung (42) mit einem Drehkörper (44), wobei die Drehkörper (44) unabhängig voneinander über die jeweilige Schwenkeinrichtung (42) um die Schwenkachse (34) relativ zum Trägerteil (30) verschwenkbar sind;
- ein jeweiliges Bürstensegment (40) umfasst mindestens eine Rückstelleinrichtung (122, 124);
- das Trägerteil (30) ist unangetrieben.

12. Fahrzeugbehandlungsbürste nach einem der voranstehenden Ansprüche, **dadurch gekennzeichnet, dass** die Drehkörper (44) von zwei oder mehr Bürstensegmenten (40) mittels eines Antriebsmotors (94) der Antriebseinrichtung (56) antreibbar sind oder dass die Antriebseinrichtung (56) eine Mehrzahl von Antriebsmotoren (172; 182) umfasst und dass jedem Bürstensegment (40) ein Antriebsmotor (172; 182) zum Antreiben des jeweiligen Drehkörpers (44) zugeordnet ist.

13. Fahrzeugbehandlungsbürste nach einem der voranstehenden Ansprüche, **dadurch gekennzeichnet, dass** die Schwenkeinrichtung (42) mindestens einen um die Schwenkachse (34) schwenkbaren Schwenkkörper (46) umfasst, relativ zu dem der Drehkörper (44) drehbeweglich ausgestaltet ist, wobei der mindestens eine Schwenkkörper (46) mit dem Drehkörper (44) gekoppelt ist und die Rückstellkraft der Torsionsfeder (130) am mindestens einen Schwenkkörper (46) angreift.

14. Fahrzeugbehandlungsbürste nach einem der voranstehenden Ansprüche, **dadurch gekennzeichnet, dass** die Fahrzeugbehandlungsbürste (14; 160; 170; 108) eine Seitenbürste (16) oder eine Dachbürste ist und/oder dass die Reinigungselemente (58) Borsten, Waschstreifen oder Polierstreifen sind.

15. Fahrzeugbehandlungsanlage, umfassend mindestens eine Fahrzeugbehandlungsbürste, insbesondere Waschbürste (14; 160; 170; 108), nach einem der voranstehenden Ansprüche.

## Claims

1. Vehicle treatment brush for washing and/or polishing purposes in a vehicle treatment installation, comprising a support part (30) having a longitudinal extent and defining a pivotal axis (34), a plurality of brush segments (40) arranged axially next to each other and each comprising cleaning elements (58), and a drive device (56), **characterized in that** at least one brush segment (40) comprises a pivoting device (42) with a rotary body (44) on which the cleaning elements (58) of the brush segment (40) are indirectly or directly held and which is in operative connection with the drive device (56) for driving the rotary body (44) about a rotational axis (54) of the brush segment (40) that is different from the pivotal axis (34), wherein the rotary body (44) is pivotable about the pivot axis (34) relative to the support part (30) by way of the pivoting device (42), wherein the brush segment (40) comprises at least one restoring device (122, 124) with a restoring element (126), against the action of which the pivoting device (42) is pivotable relative to the support part (30) in a pivot direction (106, 108), wherein the restoring element comprises or forms a torsional spring (130) which couples to the pivoting device (42) on the one hand and to a stationary holding element (136) on the other hand for pivoting the pivoting device (42) and the holding element (136) relative to each other.

2. Vehicle treatment brush in accordance with Claim 1, **characterized in that** at least one of the following applies:
- the torsional spring (130) is configured as a coil spring;
- a core (134) is provided which the torsional spring (130) surrounds, wherein in particular the support part (30) comprises or forms the core (134);
- the torsional spring (130) is aligned coaxially to the support part (30).

3. Vehicle treatment brush in accordance with any one of the preceding Claims, **characterized in that** the support part (30) forms the holding element (136) or **in that** the holding element (136) is secured on the support part (30) and/or **in that** the torsional spring (130) is arranged within a contour of the rotary body (44) independently of the position of the pivoting device (42) relative to the support part (30).

4. Vehicle treatment brush in accordance with any one of the preceding Claims, **characterized in that** the pivoting device (42) is pivotable in the pivot direction (106, 108) relative to the support part (30) commencing from a base position against a pretension of the torsional spring (130), preferably **in that** the pretension of the torsional spring (130) is variable.

5. Vehicle treatment brush in accordance with Claim 4, **characterized in that** the holding element (130) comprises or forms a plurality of receptacles (140) into which the torsional spring (130) may selectively engage and thereby may be brought into different tensioned states.

6. Vehicle treatment brush in accordance with any one of the preceding Claims, **characterized in that** the rotary body (44) is pivotable in two opposite pivot directions (106, 108) by way of the pivoting device (42).

7. Vehicle treatment brush in accordance with any one of the preceding Claims, **characterized in that** the restoring device (122, 124) comprises a stop element (152) for the torsional spring (130) against which the latter strikes when the pivoting device (42) adopts a base position in such a way that no spring force is exerted on the pivoting device (42) by way of the spring element (130) in the base position, and **in that** the pivoting device (42) is pivotable in the opposite pivot direction (106, 108) commencing from the base position.

8. Vehicle treatment brush in accordance with any one of the preceding Claims, **characterized in that** the brush segment (40) comprises two restoring devices (122, 124), wherein the rotary body (44) is pivotable relative to the support part (30) in two opposite pivot directions (106, 108) by way of the pivoting device (42), against the action of a respective restoring element (126) of a restoring device (122, 124).

9. Vehicle treatment brush in accordance with Claim 8, **characterized in that** the restoring devices (122, 124) are arranged axially on mutually opposite sides of the pivoting device (42) and/or **in that** both restoring elements (126) are configured as torsional springs (130) which couple to the pivoting device (42) on the one hand and to a respective stationary holding element (136) on the other hand.

10. Vehicle treatment brush in accordance with Claim 9, **characterized in that** at least one of the following applies:
- the torques which are exertable on the pivoting device by the torsional springs (130) are opposed to each other;
- the torsional springs (130) strike against respective stop elements (152) when the pivoting device (42) adopts the base position;
- the pivoting device (42) in the base position is free of restoring forces and torques, respectively, exertable by way of the torsional springs (130).

11. Vehicle treatment brush in accordance with any one of the preceding Claims, **characterized in that** at least one of the following applies:
- two or more brush segments (40) comprise a pivoting device (42) with a rotary body (44), wherein the rotary bodies (44) are pivotable independently of each other about the pivotal axis (34) relative to the support part (30) by way of the respective pivoting device (42);
- a respective brush segment (40) comprises at least one restoring device (122, 124);
- the support part (30) is non-driven.

12. Vehicle treatment brush in accordance with any one of the preceding Claims, **characterized in that** the rotary bodies (44) of two or more brush segments (40) are drivable by means of a drive motor (94) of the drive device (56) or **in that** the drive device (56) comprises a plurality of drive motors (172; 182), and **in that** a drive motor (172; 182) is associated with each brush segment (40) for driving the respective rotary body (44).

13. Vehicle treatment brush in accordance with any one of the preceding Claims, **characterized in that** the pivoting device (42) comprises at least one pivotal body (46) which is pivotable about the pivotal axis (34) and relative to which the rotary body (44) is configured to be rotational, wherein the at least one pivotal body (46) is coupled to the rotary body (44) and the restoring force of the torsional spring (130) engages on the at least one pivotal body (46).

14. Vehicle treatment brush in accordance with any one of the preceding Claims, **characterized in that** the vehicle treatment brush (14; 160; 170; 108) is a side brush (16) or a roof brush and/or **in that** the cleaning elements (58) are bristles, washing strips, or polishing strips.

15. Vehicle treatment installation, comprising at least one vehicle treatment brush, in particular washing brush (14; 160; 170; 108), in accordance with any one of the preceding Claims.

## Revendications

1. Brosse de traitement de véhicule aux fins de lavage et/ou de polissage dans une installation de traitement de véhicule, comprenant une partie de support (30) présentant une étendue longitudinale et définissant un axe de pivotement (34), une pluralité de segments de brosse (40) disposés axialement les uns à côté des autres et comprenant respectivement des éléments de nettoyage (58) et un dispositif d'entraînement (56), **caractérisée en ce que**
au moins un segment de brosse (40) comprend un dispositif de pivotement (42) avec un corps rotatif (44), sur lequel les éléments de nettoyage (58) du segment de brosse (40) sont retenus indirectement ou directement et qui est en liaison fonctionnelle avec le dispositif d'entraînement (56) pour l'entraînement du corps rotatif (44) autour d'un axe de rotation (54), différent de l'axe de pivotement (34), du segment de brosse (40), dans laquelle le corps rotatif (44) peut pivoter autour de l'axe de pivotement (34) par rapport à la partie de support (30) par l'intermédiaire du dispositif de pivotement (42), dans laquelle le segment de brosse (40) comprend au moins un dispositif de rappel (122, 124), avec un élément de rappel (126), à l'encontre de l'effet duquel le dispositif de pivotement (42) peut pivoter par rapport à la partie de support (30) dans une direction de pivotement (106, 108), dans laquelle l'élément de rappel comprend ou forme un ressort de torsion (130), qui s'accouple d'une part au dispositif de pivotement (42) et d'autre part à un élément de retenue (136) fixe pour le pivotement du dispositif de pivotement (42) et de l'élément de retenue (136) l'un par rapport à l'autre.

2. Brosse de traitement de véhicule selon la revendication 1, **caractérisée en ce qu'**au moins un de ce qui suit s'applique :
- le ressort de torsion (130) est réalisé sous la forme d'un ressort hélicoïdal ;
- une partie centrale (134) est prévue, que le ressort de torsion (130) entoure, dans laquelle en particulier la partie de support (30) comprend ou réalise la partie centrale (134) ;
- le ressort de torsion (130) est orienté de manière coaxiale par rapport à la partie de support (30).

3. Brosse de traitement de véhicule selon l'une quelconque des revendications précédentes, **caractérisée en ce que** la partie de support (30) forme l'élément de retenue (136) ou que l'élément de retenue (136) est fixé sur la partie de support (30) et/ou que le ressort de torsion (130) est disposé à l'intérieur d'un contour du corps rotatif (44) indépendamment de la position du dispositif de pivotement (42) par rapport à la partie de support (30).

4. Brosse de traitement de véhicule selon l'une quelconque des revendications précédentes, **caractérisée en ce que** le dispositif de pivotement (42) peut pivoter par rapport à la partie de support (30) à partir d'une position de base à l'encontre d'une précontrainte du ressort de torsion (130) dans la direction de pivotement (106, 108), de préférence que la précontrainte du ressort de torsion (130) peut être modifiée.

5. Brosse de traitement de véhicule selon la revendication 4, **caractérisée en ce que** l'élément de retenue (136) comprend ou forme une pluralité de logements (140) dans lesquels le ressort de torsion (130) peut s'insérer sélectivement et peut être amené de cette manière dans différents états de tension.

6. Brosse de traitement de véhicule selon l'une quelconque des revendications précédentes, **caractérisée en ce que** le corps rotatif (44) peut pivoter dans deux directions de pivotement (106, 108) opposées l'une à l'autre par l'intermédiaire du dispositif de pivotement (42).

7. Brosse de traitement de véhicule selon l'une quelconque des revendications précédentes, **caractérisée en ce que** le dispositif de rappel (122, 124) comprend un élément de butée (152) pour le ressort de torsion (130), contre lequel celui-ci est en butée lorsque le dispositif de pivotement (42) occupe une position de base, de telle sorte que, dans la position de base, aucune force élastique n'est exercée sur le dispositif de pivotement (42) par l'intermédiaire du ressort de torsion (130), et que le dispositif de pivotement (42) peut pivoter dans la direction de pivotement (106, 108) opposée à partir de la position de base.

8. Brosse de traitement de véhicule selon l'une quelconque des revendications précédentes, **caractérisée en ce que** le segment de brosse (40) comprend deux dispositifs de rappel (122, 124), dans laquelle le corps rotatif (44) peut pivoter dans deux directions de pivotement (106, 108) opposées l'une à l'autre par rapport à la partie de support (30) par l'intermédiaire du dispositif de pivotement (42), à l'encontre de l'effet d'un élément de rappel (126) respectif d'un dispositif de rappel (122, 124).

9. Brosse de traitement de véhicule selon la revendication 8, **caractérisée en ce que** les dispositifs de rappel (122, 124) sont disposés axialement sur les faces opposées l'une à l'autre du dispositif de pivotement (42) et/ou que les deux éléments de rappel (126) sont réalisés sous la forme de ressorts de torsion (130) qui s'accouplent au dispositif de pivotement (42) d'une part et à un élément de retenue (136) fixe respectif d'autre part.

10. Brosse de traitement de véhicule selon la revendication 9, **caractérisée en ce qu'**au moins un de ce qui suit s'applique :
- les couples pouvant être exercés par les ressorts de torsion (130) sur le dispositif de pivotement (42) sont opposés les uns aux autres ;
- les ressorts de torsion (130), lorsque la position de base est occupée par le dispositif de pivotement (42), sont en butée contre des éléments de butée (152) respectifs ;
- le dispositif de pivotement (42), dans la position de base, est exempt de forces de rappel ou couples pouvant être exercés par l'intermédiaire des ressorts de torsion (130).

11. Brosse de traitement de véhicule selon l'une quelconque des revendications précédentes, **caractérisée en ce qu'**au moins un de ce qui suit s'applique :
- deux segments de brosse (40) ou plus comprennent un dispositif de pivotement (42) avec un corps rotatif (44), dans laquelle les corps rotatifs (44) peuvent pivoter par rapport à la partie de support (30) indépendamment l'un de l'autre autour de l'axe de pivotement (34) par l'intermédiaire du dispositif de pivotement (42) respectif ;
- un segment de brosse (40) respectif comprend au moins un dispositif de rappel (122, 124) ;
- la partie de support (30) n'est pas entraînée.

12. Brosse de traitement de véhicule selon l'une quelconque des revendications précédentes, **caractérisée en ce que** les corps rotatifs (44) de deux segments de brosse (40) ou plus peuvent être entraînés au moyen d'un moteur d'entraînement (94) du dispositif d'entraînement (56) ou que le dispositif d'entraînement (56) comprend une pluralité de moteurs d'entraînement (172 ; 182) et qu'un moteur d'entraînement (172 ; 182) destiné à entraîner le corps rotatif (44) respectif est associé à chaque segment de brosse (40).

13. Brosse de traitement de véhicule selon l'une quelconque des revendications précédentes, **caractérisée en ce que** le dispositif de pivotement (42) comprend au moins un corps pivotant (46), pouvant pivoter autour de l'axe de pivotement (34), par rapport auquel le corps rotatif (44) est réalisé de manière mobile en rotation, dans laquelle le au moins un corps pivotant (46) est accouplé au corps rotatif (44) et la force de rappel du ressort de torsion (130) agit sur le au moins un corps pivotant (46).

14. Brosse de traitement de véhicule selon l'une quelconque des revendications précédentes, **caractérisée en ce que** la brosse de traitement de véhicule (14 ; 160 ; 170 ; 108) est une brosse latérale (16) ou une brosse de toit et/ou que les éléments de nettoyage (58) sont des soies, bandes de lavage ou bandes de polissage.

15. Installation de traitement de véhicule, comprenant au moins une brosse de traitement de véhicule, en particulier brosse de lavage (14 ; 160 ; 170 ; 108), selon l'une quelconque des revendications précédentes.
